(19) Europäisches Patentamt
European Patent Office
Office européen des brevets

(11) Publication number: **0 112 593 B1**

(12) # EUROPEAN PATENT SPECIFICATION

(45) Date of publication of patent specification: **19.07.89**

(51) Int. Cl.$^4$: **C 11 D 3/00,** C 11 D 3/30, C 11 D 1/44, C 11 D 1/88

(21) Application number: **83201776.8**

(22) Date of filing: **14.12.83**

(54) **Detergent compositions containing ethoxylated amines having clay soil removal/anti-redeposition properties.**

(30) Priority: **23.12.82 US 452646**
**23.12.82 US 452656**

(43) Date of publication of application:
**04.07.84 Bulletin 84/27**

(45) Publication of the grant of the patent:
**19.07.89 Bulletin 89/29**

(84) Designated Contracting States:
**AT BE CH DE FR IT LI NL SE**

(56) References cited:
**EP-A-0 032 837**
**US-A-3 925 262**
**US-A-3 929 678**
**US-A-4 301 044**

(73) Proprietor: **THE PROCTER & GAMBLE COMPANY**
**301 East Sixth Street**
**Cincinnati Ohio 45202 (US)**

(72) Inventor: **Vander Meer, James Michael**
**10283 Pippin Road**
**Cincinnati Ohio 45231 (US)**
Inventor: **Rubingh, Donn Nelton**
**8224 Sheed Road**
**Cincinnati Ohio 45239 (US)**
Inventor: **Gosselink, Eugene Paul**
**3754 Susanna Drive**
**Cincinnati Ohio 45239 (US)**

(74) Representative: **Ernst, Hubert et al**
**PROCTER & GAMBLE EUROPEAN TECHNICAL CENTER Temselaan 100**
**B-1820 Strombeek-Bever (BE)**

**EP 0 112 593 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present application relates to ethoxylated amines having clay-soil removal/anti-redeposition properties when used in detergent compositions.

A particularly important property of a detergent composition is its ability to remove particulate type soils from a variety of fabrics during laundering. Perhaps the most important particulate soils are the clay-type soils. Clay soil particles generally comprise negatively charged layers of aluminosilicates and positively charged cations (e.g. calcium) which are positioned between and hold together the negatively charged layers.

A variety of models can be proposed for compounds which would have clay soil removal properties. One model requires that the compound have two distinct characteristics. The first is the ability of the compound to adsorb onto the negatively charged layers of the clay particle. The second is the ability of the compound, once absorbed, to push apart (swell) the negatively charged layers so that the clay particle loses its cohesive force and can be removed in the wash water.

One class of clay-soil removal compounds which appears to work according to this model are the polyethoxy zwitterionic surfactants disclosed in U.S. Patent 4,301,044 to Wentler et al., issued November 17, 1981. Representative of such compounds are those having the formula:

$$R^1 - \overset{\overset{\large CH_3}{|}}{\underset{\underset{\large CH_3}{|}}{N^+}} -(CH_2)_x\overset{\overset{O}{\|}}{C}-O-(CH_2CH_2O)_ySO_3^-$$

wherein $R^1$ is a $C_{14}$—$C_{20}$ alkyl group; x is 1 or an integer of from 3 to 5; and y is from 6 to 12. See also U.S. Patent 3,929,678 to Laughlin et al., issued December 30, 1975 (detergent composition containing polyethoxy zwitterionic surfactant plus other detergent surfactants); U.S. Patent 3,925,262 to Laughlin et al., issued December 9, 1975 (detergent composition containing polyethoxy zwitterionic surfactants with detergent builders); U.S. Patent 4,157,277 to Gosselink et al., issued June 26, 1979 ($C_4$ polyoxyalkylene zwitterionic surfactants useful in detergent compositions); U.S. Patent 4,165,334 to Gosselink et al., issued August 21, 1979 (sulfonium-type polyethoxy zwitterionic surfactants).

These polyethoxy zwitterionic surfactants are generally compatible with other detergent surfactants such as the nonionic, zwitterionic and ampholytic types. However, as indicated in the Wentler et al. patent, most anionic surfactants interfere with the particulate soil removal performance of these compounds; anionic soils such as fatty acids likewise interfere. Because anionic detergent surfactants form the most important class of such materials for use in detergent compositions, the lack of compatibility between these polyethoxy zwitterionic surfactants and anionic surfactants poses a significant handicap where particulate (clay) soil removal is desired.

In addition to clay soil removal, one of the other properties mentioned in the Laughlin et al. patents with regard to these polyethoxy zwitterionic surfactants is the ability to keep the removed soil in suspension during the laundering cycle. Soil which is removed from the fabric and suspended in the wash water can redeposit onto the surface of the fabric. This redeposited soil causes a dulling or "graying" effect which is especially noticeable on white fabrics. Because soil is normally hydrophobic, this graying effect is a particularly important problem for those fabrics made in total or in part from hydrophobic fibers, e.g. polyester.

To minimize this problem, anti-redeposition or whiteness maintenance agents can be included in the detergent composition. Besides the previously mentioned polyethoxy zwitterionic surfactants, there are a variety of other compounds which can be used as anti-redeposition agents. One class of agents are the water-soluble copolymers of acrylic or methacrylic acid with acrylic or methacrylic acid-ethylene oxide condensates disclosed in U.S. Patent 3,719,647 to Hardy et al., issued March 6, 1973. Another class of anti-redeposition agents are the cellulose and carboxymethylcellulose derivatives disclosed in U.S. Patent 3,597,416 to Diehl, issued August 3, 1971 (ionic combination of dodecyltrimethyl phosphonium chloride and sodium carboxymethylcellulose), and U.S. Patent 3,523,088 to Dean et al., issued August 4, 1970 (anti-redeposition agent consisting of alkali metal carboxymethylcellulose and hydroxypropylcellulose). A mixture of compounds has also been used to provide not only anti-redeposition, but also clay soil removal properties. See U.S. Patent 4,228,044 to Cambre, issued October 14, 1980, which discloses detergent compositions having anti-redeposition an clay soil removal properties which can comprise a nonionic alkyl polyethoxy surfactant, a polyethoxy alkyl quaternary cationic surfactant and a fatty amide surfactant.

These anti-redeposition agents do have a number of significant handicaps. While effective to keep soil suspended, these compounds may lack additional clay soil removal properties. Moreover, as disclosed in the Diehl and Dean et al. patents, mixtures of compounds can be required to achieve the anti-redeposition benefit. To the extent that there are combined anti-redeposition/clay soil removal benefits as disclosed in the Cambre patent, mixtures of compounds are also required.

It is therefore an object of the present invention to provide compounds useful in detergent compositions which provide particulate soil, in particular clay soil, removal benefits.

It is further object of the present invention to provide compounds useful in detergent compositions which provide clay sol removal benefits and are anionic detergents surfactant compatible.

It is yet another object of the present invention to provide compounds useful in detergent compositions having anti-redeposition properties.

It is yet a further object of the present invention to provide compounds useful in detergent compositions which combine both clay soil removal and anti-redeposition properties.

These and further objects of the present invention are hereinafter disclosed.

## Background Art

*U.S. Patent 3,301,783 to Dickson, et al., issued January 31, 1967,* discloses oxyalkylated, acylated, alkylated, carbonylated and olefinated derivatives of polyalkyleneimines, in particular polyethyleneimines (PEIs). For the oxyalkylated derivatives, the alkylene oxide (e.g. ethylene oxide) is reacted with the polyalkyleneimine in a mole ratio of from 1:1 to 1000:1, and preferably in a ratio of from 1:1 to 200:1. Among the ethoxylated PEIs disclosed are Examples 1—$O_7$ and 1—$O_8$ formed by condensing 105 and 200 moles, respectively, of ethylene oxide with a 900 M.W. PEI. The degree of ethoxylation calculates out to about 4.5 and about 8 ethoxy groups per reactive site, respectively. See also Examples 27—$O_5$ and 27—$O_6$ which disclose ethoxylated polypropyleneimines (M.W. 500) which have about 4 and about 8 ethoxy units per reactive site, respectively. Amongst the numerous disclosed uses of these polyalkyleneimine derivatives is a teaching that they are useful as detergents, softening agents, and anti-static agents. Preferred uses disclosed by this patent are as chelating agents, lubricating oil additives, emulsifying agents, and cutting oils.

*U.S. Patent 2,792,371 to Dickson, issued May 14, 1957,* teaches a process for breaking petroleum emulsions with oxyalkylated tetraethylene pentaamines (TEPA). Ethoxylated TEPAs specifically disclosed include those having about 5 (Example 3aa), about 7 (Example 4aa), about 8.5 (Example 5a) and about 15.5 (Example Bc) ethoxy units per reactive site. Similarly, U.S. patent 2,792,370 to Dickson issued May 14, 1957, teaches a process for breaking petroleum emulsions with oxyalkylated triethylene tetramines (TETAs) including those having about 5.5 (Example 3aa), about 7.5 (Example 4aa), about 9 (Example 5a) and about 16.5 (Example Bc) ethoxy units per reactive site. See also U.S. patent 2,792,372 to Dickson, issued May 14, 1957, (oxyalkylated higher PEAs used to break petroleum emulsions); U.S. patent 2,792,369 to Dickson, issued May 14, 1957 (oxyalkylated diethylene triamines used to break petroleum emulsions).

*U.S. Patent 4,171,278 to Andree et al., issued October 16, 1979,* discloses cold water detergent compositions containing a detergent surfactant (e.g. anionic) and a hydroxyalkyl amine in a weight ratio of 100:1 to 1:1. The amine can have the formula:

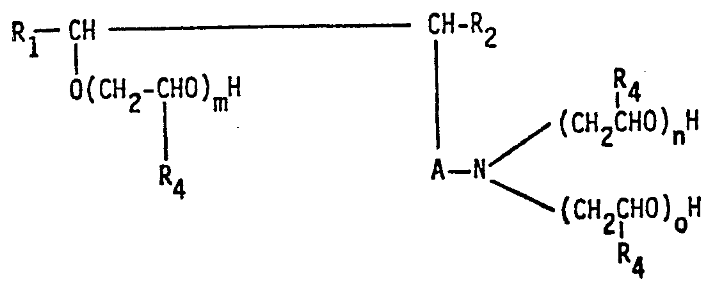

wherein $R_1$ is $C_1$—$C_{16}$ alkyl; $R_2$ is H or $C_1$—$C_{16}$ alkyl; $R_1 + R_2$ have 6—20 carbon atoms; $R_4$ is H or methyl; m, n, and o, are each 0 to 3 and A is bridging group such as

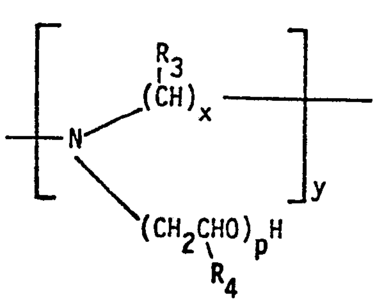

wherein $R_3$ is H or methyl; x is 2 to 6; y is 1 to 3; and p is 0 to 3; the sum of m to p being 1 to 5.5, and preferably 1 to 2. See also German Patent Document 2,165,900 to Henkel, published July 5, 1973, which discloses a washing agent for graying prevention formed by the reaction product of a PEI with an alkylglycidylether and ethylene oxide (2-hydroxyethyl moiety at each reactive site when ethoxylated).

*European Patent Application 42,187 to Koster, published December 23, 1981,* discloses detergent compositions having enhanced soil release and cleaning properties. These compositions contain from about 2% to about 60% by weight of a detergent surfactant (e.g. anionic) and from 0.1% to 1.2% by weight of a polyamine. This polyamine has the formula:

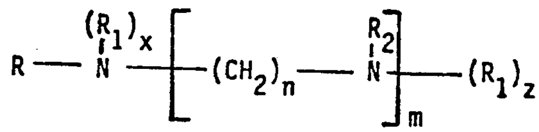

wherein R is a $C_{10}$ to $C_{22}$ alkyl or alkenyl group; $R_1$ is ethylene-oxide/propylene oxide; $R_2$ can be $(R_1)_y$; x, y, and z are numbers such that their sum is from 2 to about 25; n is from 1 to about 6; and m is from 1 to about 9. Preferred polyamines are those where $R_1$ is ethylene oxide, $R_2$ is ethylene oxide, n is 2 or 3, m is 1 to 3, and x, y, z, are each 1 to 4 with their sum being from 3 to 18. Examples 6 and 7 disclose ethoxylated N-hydrogenated tallow-propylene-1,3-diamines, where the sum of x, y and z are 7 and 12, respectively.

*U.S. Patent 3,838,057 to Barnes et al., issued September 24, 1974,* discloses toilet bars containing ethoxylated quaternary ammonium compuonds, including ethoxylated, quaternized PEIs taught to be useful in the detergent, textile, and polymer industries, as anti-static and softening agents. These ethoxylated quaternized PEIs have the formula:

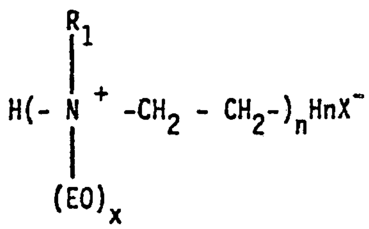

wherein $R_1$ is a compatible quaternary nitrogen substituent; n is at least 2; x is from 3 to 40; and $X^-$ is a compatible anion. Preferred compounds are those where $R_1$ is a $C_8$—$C_{22}$ alkyl group or the group:

$$R'COO(EO)_y—CH_2CHOHCH_2—$$

where R′ is a $C_8$—$C_{22}$ alkyl group and y is from 3 to 40. See also U.S. Patent 4,179,382 to Rudkin et al., issued December 18, 1979; U.S. Patent 4,152,272 to Young, issued May 1, 1979; and European Patent Application 2,085 to Rudkin et al., published May 30, 1979, which disclose ethoxylated quaternizing polyamines having $C_{10}$ to $C_{24}$ alkyl or alkenyl groups attached to one of the nitrogen atoms useful as fabric softeners.

There are several patents which disclose detergent compositions, shampoo compositions and the like containing slightly ethoxylated PEIs (ethylene oxide: PEI weight ratio of 4:1 or less) to enhance the deposition and retention of particulate substances such as antimicrobials. See, for example, U.S. Patent 3,489,686 to Parran, issued January 13, 1970; U.S. Patent 3,580,853 to Parran, issued May 25, 1971; British Patent Specification 1,111,708 to Procter & Gamble published May 1, 1968, U.S. Patent 3,549,546 to Moore, issued December 22, 1970; and U.S. Patent 3,549,542 to Holderby, issued December 22, 1970.

Disclosure of the Invention

The present invention relates to detergent compositions which comprise from 0.05 to 95% by weight of water-soluble ethoxylated amines having clay soil removal/anti-redeposition properties. These compounds are selected from the group consisting of:

(1) ethoxylated monoamines having the formula:

$$(X—L—)—N—(R^2)_2$$

(2) ethoxylated diamines having the formula:

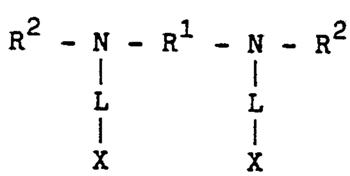

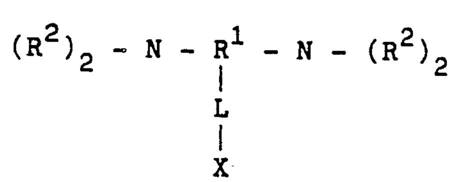

or

$$(X-L-)_2- N - R^1 - N - (R^2)_2$$

(3) ethoxylated polyamines having the formula:

$$R^3-[(A^1)_q-(R^4)_t-\overset{R^2}{\overset{|}{N}}-L-X]_p$$

(4) ethoxylated amine polymers having the general formula:

$$[(R^2)_2-N-]_w-[-R^1-\underset{|}{N}-]_x-[-R^1-\underset{\underset{\underset{X}{|}}{L}}{\underset{|}{N}}-]_y-[-R^1-\overset{R^2}{\overset{|}{N}}-L-X]_z$$

and (5) mixtures thereof; wherrein $A^1$ is

$$-\underset{R}{\underset{|}{N}}\overset{O}{\overset{\|}{C}}-,\ -\underset{R}{\underset{|}{N}}\overset{O}{\overset{\|}{C}}O-,\ -\underset{R}{\underset{|}{N}}\overset{O}{\overset{\|}{C}}\underset{R}{\underset{|}{N}}-,\ -\overset{O}{\overset{\|}{C}}\underset{R}{\underset{|}{N}}-,\ -O\overset{O}{\overset{\|}{C}}\underset{R}{\underset{|}{N}}-,\ -\overset{O}{\overset{\|}{C}}O-,\ -O\overset{O}{\overset{\|}{C}}O-,\ -O\overset{O}{\overset{\|}{C}}-,\ -\overset{O}{\overset{\|}{C}}\underset{R}{\underset{|}{N}}\overset{O}{\overset{\|}{C}}-$$

or $-O-$ ;

R is H or $C_1$—$C_4$ alkyl or hydroxyalkyl; $R^1$ is $C_2$—$C_{12}$ alkylene, hydroxyalkylene, alkenylene, arylene or alkarylene, or a $C_2$—$C_3$ oxyalkylene moiety having from 2 to 20 oxyalkylene units provided that no O—N bonds are formed; each $R^2$ is $C_1$—$C_4$ alkyl or hydroxyalkyl, the moiety —L—X, or two $R^2$ together form the moiety $—(CH_2)_r—A^2—(CH_2)_s—$, wherein $A^2$ is —O— or $—CH_2—$, r is 1 or 2, s is 1 or 2, and r + s is 3 or 4; X is a nonionic group, an anionic group or mixture thereof; $R^3$ is a substituted $C_3$—$C_{12}$ alkyl, hydroxyalkyl, alkenyl, aryl, or alkaryl group having p substitution sites; $R^4$ is $C_1$—$C_{12}$ alkylene, hydroxyalkylene, alkenylene, arylene or alkarylene, or a $C_2$—$C_3$ oxyalkylene moiety have from 2 to 20 oxyalkylene units provided that no O—O or O—N bonds are formed; L is a hydrophilic chain which contains the polyoxyalkylene moiety $—[(R^5O)_m(CH_2CH_2O)_n]—$, wherein $R^5$ is $C_3$—$C_4$ alkylene or hydroxyalkylene and m and n are numbers such that the moiety $—(CH_2CH_2O)_n—$ comprises at least 50% by weight of said polyoxyalkylene moiety; for said monoamines, m is from 0 to 4, and n is at least 12; for said diamines, m is from 0 to 3, and n is at least 6 when $R^1$ is $C_2$—$C_3$ alkylene hydroxyalkylene, or alkenylene, and at least 3 when $R^1$ is other than $C_2$—$C_3$ alkylene, hydroxyalkylene or alkenylene; for said polyamines and amine polymers, m is from 0 to 10 and n is at least 3; p is from 3 to 8; q is 1 or 0; t is 1 or 0, provided that t is 1 when q is 1; w is 1 or 0; x + y + z is at least 2; and y + z is at least 2.

In addition to the ethoxylated amines, the detergent compositions further comprise from 1 to 75% by weight of a nonionic, anionic, ampholytic, zwitterionic or cationic detergent surfactant or mixture thereof. In addition to these detergent surfactants, the detergent composition can optionally comprise from 0 to 80% by weight of a detergent builder.

The ethoxylated amines of the present inventon provide clay soil removal benefits while being anionic detergent surfactant compatible. At most wash pH's, it is believed that the nitrogen atoms of these compounds are partially protonated. The resulting positively charged centers (and remaining polar nitrogen atoms) are believed to aid in the adsorption of the compound onto the negatively charged layers of the clay particle. It is also believed that the hydrophilic ethoxy units of the compound swell the clay particle so that it loses its cohesive character and is swept away in the wash water.

The anti-redeposition benefits provided by these ethoxylated amines are also believed to be due to the formation of positively charged centers which, together with the remaining polar nitrogens, aid in its adsorption onto soil suspended in the wash water. As more and more of these compounds adsorb onto the suspended soil, it becomes encased within a hydrophilic layer provided by the attached ethoxy units. As such, the hydrophilicly encased soil is prevented from redepositing on fabrics, in particular hydrophobic fabrics such as polyester, during the laundering cycle.

Ethoxylated Amines

The water-soluble ethoxylated amines useful in detergent compositions of the present invention are selected from ethoxylated monoamines, ethoxylated diamines, ethoxylated polyamines, ethoxylated amine polymers, and mixtures thereof as previously defined.

In the preceding formulas, $R^1$ can be branched

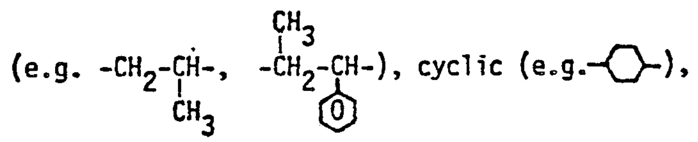

or most preferably linear

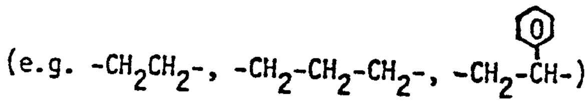

alkylene, hydroxyalkylene, alkenylene, alkarylene or oxyalkylene. $R^1$ is preferably $C_2$—$C_6$ alkylene for the ethoxylated diamines and amine polymers. For the ethoxylated diamines, the minimum degree of ethoxylation required for suitable clay soil removal/anti-redeposition properties decreases on going from $C_2$—$C_3$ alkylene (ethylene, propylene) to hexamethylene. However, for the ethoxylated amine polymers, in particular the ethoxylated polyalkeneamines and polyalkyleneimines, especially at higher molecular weights, $C_2$—$C_3$ alkylenes (ethylene, propylene) are preferred for $R^1$ with ethylene being most preferred. Each $R^2$ is preferably the moiety —L—X.

In the preceding formulas, hydrophilic chain L usually consists entirely of the polyoxyalkylene moiety —$[(R^5O)_m(CH_2CH_2O)_n]$—. The moieties —$(R^5O)_m$— and —$(CH_2CH_2O)_n$— of the polyoxyalkylene moiety can be mixed together or preferably form blocks of —$(R^5O)_m$— and —$(CH_2CH_2O)_n$— moieties. $R^5$ is preferably $C_3H_6$ (propylene). For the ethoxylated polyamines and amine polymers, m is preferably from 0 to 5. For all ethoxylated amines of the present invention, m is most preferably 0, i.e. the polyoxyalkylene moiety consists entirely of the moiety —$(CH_2CH_2O)_n$—. The moiety —$(CH_2CH_2O)_n$— preferably comprises at least 85% by weight of the polyoxyalkylene moiety and most preferably 100% by weight (m is 0).

In the preceding formula, X can be any compatible nonionic group, anionic group or mixture thereof. Suitable nonionic groups include $C_1$—$C_4$ alkyl or hydroxyalkyl ester or ether groups, preferably acetate or methyl ether, respectively; hydrogen (H); or mixtures thereof. The particularly preferred nonionic group is H. With regard to anionic groups, $PO_3^{-2}$ and $SO_3^-$ are suitable. The particularly preferred anionic group is $SO_3^-$. It has been found that the percentage of anionic groups relative to nonionic groups can be important to the clay soil removal/anti-redeposition properties provided by the ethoxylated amine. A mixture of from 0 to 30% anionic groups and from 70 to 100% nonionic groups provides preferred properties. A mixture of from 5 to 10% anionic groups and from 90 to 95% nonionic groups provides the most preferred properties. Usually, a mixture of from 0 to 80% anionic groups and from 20 to 100% nonionic groups provides suitable clay soil removal/anti-redeposition properties.

Preferred ethoxylated mono- and diamines have the formula:

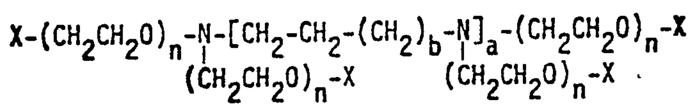

wherein X and n are defined as before, a is 0 or 1, and b is from 0 to 4. For preferred ethoxylated monoamines (a = 0), n is at least 15, with a typical range of from 15 to 35. For preferred ethoxylated diamines (a = 1), n is at least 12 with a typical range of from 12 to 42.

In the preceding formula for the ethoxylated polyamines, $R^3$ (linear, branched or cyclic) is preferably a substituted $C_3$—$C_6$ alkyl, hydroxyalkyl or aryl group; $A^1$ is preferably

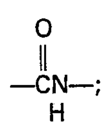

n is preferably at least 12, with a typical range of from 12 to 42; p is preferably from 3 to 6. When $R^3$ is a substituted aryl or alkaryl group, q is preferably 1 and $R^4$ is preferably $C_2$—$C_3$ alkylene. When $R^3$ is an alkyl, hydroxyalkyl, or alkenyl group, and when q is 0, $R^1$ is preferably a $C_2$—$C_3$ oxyalkylene moiety; when q is 1, $R^4$ is preferably $C_2$—$C_3$ alkylene.

These ethoxylated polyamines can be derived from polyamino amides such as:

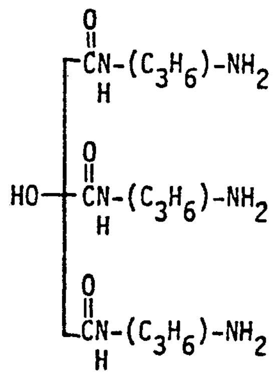

or

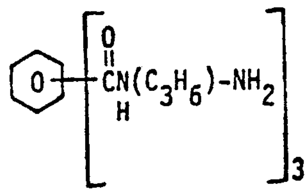

These ethoxylated polyamines can also be derived from polyaminopropyleneoxide derivatives such as:

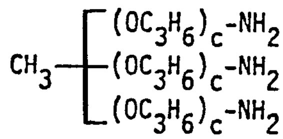

wherein each c is a number of from 2 to 20.

Preferred ethoxylated amine polymers are the ethoxylated $C_2$—$C_3$ polyalkyleneamines and polyalkyeneimines. Particularly preferred ethoxylated polyalkyleneamines and polyalkyleneimines are the ethoxylated polyethyleneamines (PEAs) and polyethyleneimines (PEIs). These preferred compounds comprise units having the general formula:

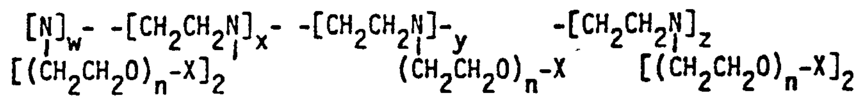

wherein X, w, x, y, z and n are defined as before.

Prior to ethoxylation, the PEAs used in preparing compounds of the present inventon have the following general formula:

$$[H_2N]_w- \quad -[CH_2CH_2N]_x- \; -[CH_2CH_2\underset{H}{N}]_y- \quad -[CH_2CH_2NH_2]_z$$

wherein x + y + z is from 2 to 9, y + z is from 2 to 9 and w is 0 or 1 (molecular weight of from 100 to 400). Each hydrogen atom attached to each nitrogen atom represents an active site for subsequent ethoxylation. For preferred PEAs, y + z is from 3 to 7 (molecular weight of from 140 to 310) and most preferably from 3 to 4 (molecular weight of from 140 to 200). These PEAs can be obtained by reactions involving ammonia and ethylene dichloride, followed by fractional distillation. The common PEAs obtained are triethylenetetramine (TETA) and tetraethylenepentamine (TEPA). Above the pentamines, i.e., the hexamines, heptamines, octamines and possibly nonamines, the cogenerically derived mixture does not appear to separate by distillation and can include other materials such as cyclic amines and particularly piperazines. There can also be present cyclic amines with side chains in which nitrogen atoms appear. See U.S. Patent 2,792,372 to Dickson, issued May 14, 1957, which describes the preparation of PEAs.

The minimum degree of ethoxylation required for preferred clay soil removal/anti-redeposition performance can vary depending upon the number of units in the PEA. Where y + z is 2 or 3, n is preferably at least 6. Where y + z is from 4 to 9, suitable benefits are achieved when n is at least 3. For most preferred ethoxylated PEAs, n is at least 12 with a typical range of from 12 to 42.

The PEIs used in preparing the compounds of the present invention have a molecular weight of at least 440 prior to ethoxylation, which represents at least 10 units. Preferred PEIs used in preparing these compounds have a molecular weight of from 600 to 1800. The polymer backbone of these PEIs can be represented by the general formula:

$$H_2N--[CH_2CH_2N]_x- \quad -[CH_2CH_2\overset{H}{N}]-_y \; -[CH_2CH_2NH_2]_z$$

wherein the sum of x, y and z represents a number of sufficient magnitude to yield a polymer having the molecular weights previously specified. Although linear polymer backbones are possible, branch chains can also occur. The relative proportions of primary, secondary and tertiary amine groups present in the polymer can vary, depending on the manner of preparation. the distribution of amine groups is typically as follows:

| | |
|---|---|
| $-CH_2CH_2-NH_2$ | 30% |
| $-CH_2CH_2-NH-$ | 40% |
| $-CH_2CH_2-N(-)-$ | 30% |

Each hydrogen atom attached to each nitrogen atom of the PEI represents an active site for subsequent ethoxylation. These PEIs can be prepared, for example, by polymerizing ethyleneimine in the presence of a catalyst such as carbon dioxide, sodium bisulfite, sulfuric acid, hydrogen peroxide, hydrochloric acid or acetic acid. Specific methods for preparing PEIs are disclosed in U.S. Patent 2,182,306 to Ulrich et al., issued December 5, 1939; U.S. Patent 3,033,746 to Mayle et al., issued May 8, 1962; U.S. Patent 2,208,095 to Esselmann et al., issued July 16, 1940; U.S. Patent 2,806,839 to Crowther, issued September 17, 1957; and U.S. Patent 2,553,696 to Wilson, issued May 21, 1951.

As defined in the preceding formulas, n is at least 3 for the ethoxylated PEIs. However, it should be noted that the minimum degree of ethoxylation required for suitable clay soil removal/anti-redeposition performance can increase as the molecular weight of the PEI increases, especially much beyond 1800. Also, the degree of ethoxylation for preferred compounds increases as the molecular weight of the PEI increases. For PEIs having a molecular weight of at least 600, n is preferably at least 12, with a typical range of from 12 to 42. For PEIs having a molecular weight of at least 1800, n is preferably at least 24, with a typical range of from 24 to 42.

The level at which the ethoxylated amine(s) can be present in the detergent compositions of the present invention can vary depending upon the compounds used, the particular detergent formulation (liquid, granular) and the benefits desired. These compositions can be used as laundry detergents, laundry additives, and laundry pretreatments. Generally, the ethoxylated amines can be included in an amount of from 0.05 to 95% by weight of the composition, with the usual range being from 0.1 to 10% by weight for laundry detergents. In terms of the benefits achieved, preferred detergent compositions can comprise from 0.5 to 5% by weight of the ethoxylated compounds of the present invention. Typically, these preferred compositions comprise from 1 to 3% by weight of these compounds. These compounds are normally present at a level that provides from 2 ppm to 200 ppm, preferably from 10 ppm to 100 ppm, of the compound in the wash solution at recommended U.S. usage levels, and normally from 30 ppm to 1000 ppm, preferably from 50 ppm to 500 ppm for European usage levels.

Methods for Making Ethoxylated Amines

The ethoxylated compounds of the present invention can be prepared by standard methods for ethoxylating amines. For the diamines, polyamines, and amine polymers such as the polyalkyleneamines and polyalkyleneimines, there is preferably an initial step of condensing sufficient ethylene oxide to provide 2-hydroxyethyl groups at each reactive site (hydroxyethylation). This initial step can be omitted by starting with a 2-hydroxyethyl amine such as triethanolamine (TEA). The appropriate amount of ethylene oxide is then condensed with these 2-hydroxyethylamines using an alkali metal (e.g., sodium, potassium) hydride or hydroxide as the catalyst to provide the respective ethoxylated amines. The total degree of ethoxylation per reactive site (n) can be determined according to the following formula:

$$\text{Degree of Ethoxylation} = E/(A \times R)$$

wherein E is the total number of moles of ethylene oxide condensed (including hydroxyethylation), A is the number of moles of the starting amine, and R is the number of reactive sites (typically 3 for monoamines, 4 for diamines, $2 \times p$ for polyamines, and $3 + y + z$ for the amine polymers) for the starting amine.

Representative syntheses of ethoxylated amines of the present invention are as follows:

Example 1

Tetraethylenepentamine (TEPA) (M.W. 189, 61.44 g, 0.325 moles) was placed in a nominally dry flask and dried by stirring for 0.5 hours at 110°—120°C under a vacuum (pressure less than 133.3 Pa (1 mmHg)). The vacuum was released by drawing ethylene oxide (EO) from a prepurged trap connected to a supply tank. Once the flask was filed with EO, an outlet stopcock was carefully opened to a trap connected to an exhaust bubbler. After 3 hours stirring at 107°—115°C, 99.56 g of EO was added to give a calculated degree of ethoxylation of 0.995. The reaction mixture was cooled while being swept with argon and 2.289 g (0.057 moles) of 60% sodium hydride in mineral oil was then added. The stirred reaction mixture was swept with argon until hydrogen evolution ceased. EO was then added to the reaction mixture under atmospheric pressure at 109°—118°C with moderately fast stirring. After 23 hours, a total of 1503 g (34.17 moles) of EO

had been added to give a calculated total degree of ethoxylation of 15.02. The ethoxylated TEPA obtained was a tan waxy solid.

Example 2

By a procedure similar to that of Example 1, dried PEI (M.W. 600, 14.19 g, 0.0236 moles) was hydroxyethylated with EO at 130°—140°C for 3 hours with stirring. 0.5 g (0.0125 moles) of 60% sodium hydride in mineral oil was then added and the reaction mixture swept with argon. After hydrogen evolution ceased, EO was then added under atmospheric pressure with stirring at 130°—140°C. After 14 hours, a total of 725.8 g EO had been added to give a calculated total degree of ethoxylation of 41.5. The ethoxylated PEI 600 obtained was a tan waxy solid.

Example 3

By a procedure similar to that of Example 1, dried PEA (M.W. 309, 40.17 g, 0.13 moles) was hydroxyethylated with EO at 102°—118°C with stirring. After 2 hours, 54.83 g (1.246 moles) of EO had been added for a degree of ethoxylation of 0.978. After the reaction mixture had cooled, and while being swept with argon, 1.787 g (0.0319 moles) of freshly prepared 40% potassium hydroxide solution was added. Water was removed by stirring at 120°C under an aspirator vacuum for 0.5 hours, then under a vacuum pump for 0.5 hours. EO was then added under atmospheric pressure with stirring at 109°—130°C. After 11.5 hours, a total of 1358 g of EO had been added to give a calculated total degree of ethoxylation of 24.2. The ethoxylated PEA 309 obtained was a tan waxy solid.

Example 4

By a procedure similar to that of Example 1, dried triethanolamine (M.W. 149, 89.4 g, 0.6 moles) was catalyzed with 6.32 g (0.0451 moles) of freshly prepared 40% potassum hydroxide solution under argon. Water was removed by stirring at 110°—120°C under an aspirator vacuum for 0.5 h, then under vacuum pump for 0.5 h. EO was then added under atmospheric pressure with stirring at 118°—130°C. After 5.6 h, a total of 917 g (20.84 moles) of EO had been added to give a calculated total degree of ethoxylation of 12.58. The ethoxylated amine obtained was a dark amber mobile liquid.

Example 5

By a procedure similar to that of Example 1, sieve dried (0.3 nm (3Å)) ethylenediamine (M.W. 60, 42 g, 0.7 moles) was placed in a nominally dry flask, and hydroxyethylated at 25°—116°C with rapid stirring. After 3.3 h, 143.3 g (3.25 moles) of EO had been added for a degree of ethoxylation of 1.16. After cooling the reaction mixture under argon, 9.82 g (0.07 moles) of freshly prepared 40% potassium hydroxide solution was added. Water was removed by stirring at 110°—115°C for 0.5 hours with an aspirator vacuum and 0.5 hours with a pump vacuum. EO was then added under atmospheric pressure with stirring at 100°—138°C. After 6 h a total of 2935 g (66.7 moles) of EO had been added to give a calculated total degree of ethoxylation of 23.82. The ethoxylated diamine obtained was a brown waxy solid when cooled.

Detergent Surfactants

The amount of detergent surfactant included in the detergent compositions of the present invention can vary from 1 to 75% by weight of the composition depending upon the detergent surfactant(s) used, the type of composition to be formulated (e.g. granular, liquid) and the effects desired. Preferably, the detergent surfactant(s) comprises from 10 to 50% by weight of the composition. The detergent surfactant can be nonionic, anionic, ampholytic, zwitterionic, cationic, or a mixture thereof:

A. *Nonionic Surfactants*

Suitable nonionic surfactants for use in detergent compositions of the present invention are generally disclosed in U.S. Patent 3,929,678 to Laughlin et al., issued December 30, 1975 at column 13, line 14 through column 16, line 6. Classes of nonionic surfactants included are:

1. The polyethyleneoxide condensates of alkyl phenols. These compounds include the condensation products of alkyl phenols having an alkyl group containing from 6 to 12 carbon atoms in either a straight chain or branched chain configuration with ethylene oxide, the ethylene oxide being present in an amount equal to 5 to 25 moles of ethylene oxide per mole of alkyl phenol. The alkyl substituent in such compounds can be derived, for example, from polymerized propylene, diisobutylene. Examples of compounds of this type include nonyl phenol condensed with 9.5 moles of ethylene oxide per mole of nonyl phenol; dodecylphenol condensed with 12 moles of ethylene oxide per mole of phenol; dinonyl phenol condensed with 15 moles of ethylene oxide per mole of phenol; and diisooctyl phenol condensed with 15 moles of ethylene oxide per mole of phenol. Commercially available nonionic surfactants of this type include Igepal CO—630, marketed by the GAF Corporation, and Triton X—45, X—114, X—100 and X—102, all marketed by the Rohm & Haas Company.

2. The condensation products of aliphatic alcohols with from 1 to 25 moles of ethylene oxide. The alkyl chain of the aliphatic alcohol can either be straight or branched, primary or secondary, and generally contains from 8 to 22 carbon atoms. Examples of such ethoxylated alcohols include the condensation

product of myristyl alcohol condensed with 10 moles of ethylene oxide per mole of alcohol; and the condensation product of 9 moles of ethylene oxide with coconut alcohol (a mixture of fatty alcohols with alkyl chains varying in length from 10 to 14 carbon atoms). Examples of commercially available nonionic surfactants of this type include Tergitol 15—S—9, marketed by Union Carbide Corporation, Neodol 45—9, Neodol 23—6.5, Neodol 45—7, and Neodol 45—4, marketed by Shell Chemical Company, and Kyro EOB, marketed by The Proctor & Gamble Company.

3. The condensation products of ethylene oxide with a hydrophobic base formed by the condensation of propylene oxide with propylene glycol. The hydrophobic portion of these compounds has a molecular weight of from 1500 to 1800 and exhibits water innsolubility. The addition of polyoxyethylene moieties to this hydrophobic portion tends to increase the water solubility of the molecule as a whole, and the liquid character of the product is retained up to the point where the polyoxyethylene content is 50% of the total weight of the condensation product, which corresponds to condensation with up to 40 moles of ethylene oxide. Examples of compounds of this type include certain of the commercially available Pluronic surfactants, marketed by Wyandotte Chemical Corporation.

4. The condensation products of ethylene oxide with the product resulting from the reaction of propylene oxide and ethylenediamine. The hydrophobic moiety of these products consists of the reaction product of ethylenediamine and excess propylene oxide, the moiety having a molecular weight of from 2500 to 3000. This hydrophobic moiety is condensed with ethylene oxide to the extent that the condensation product contains from 40% to 80% by weight of polyoxyethylene and has a molecular weight of from 5,000 to 11,000. Examples of this type of nonionic surfactant include certain of the commercially available Tetronic compounds, marketed by Wyandotte Chemical Corporation.

5. Semi-polar nonionic detergent surfactants which include water-soluble amine oxides containing one alkyl moiety of from 10 to 18 carbon atoms and 2 moieties selected from the group consisting of alkyl groups and hydroxyalkyl groups containing from 1 to 3 carbon atoms; water-soluble phosphine oxides containing one alkyl moiety of from 10 to 18 carbon atoms and 2 moieties selected from the group consisting of alkyl groups and hydroxyalkyl groups containing from 1 to 3 carbon atoms; and water-soluble sulfoxides containing one alkyl moiety of from 10 to 18 carbon atoms and a moiety selected from the group consisting of alkyl and hydroxyalkyl moieties of from 1 to 3 carbon atoms.

Preferred semi-polar nonionic detergent surfactants are the amine oxide detergent surfactants having the formula

$$R^3(OR^4)_x\overset{\overset{O}{\uparrow}}{N}R^5_2$$

wherein $R^3$ is an alkyl, hydroxyalkyl, or alkyl phenyl group or mixtures thereof containing from 8 to 22 carbon atoms; $R^4$ is an alkylene or hydroxyalkylene group containing from 2 to 3 carbon atoms or mixtures thereof; x is from 0 to 3; and each $R^5$ is an alkyl or hydroxyalkyl group containing from 1 to 3 carbon atoms or a polyethylene oxide group containing from one to 3 ethylene oxide groups. The $R^5$ groups can be attached to each other, e.g., through an oxygen or nitrogen atom to form a ring structure.

Preferred amine oxide detergent surfactants are $C_{10}$—$C_{18}$ alkyl dimethyl amine oxide and $C_8$—$C_{12}$ alkoxy ethyl dihydroxy ethyl amine oxide.

6. Alkylpolysaccharides disclosed in EP—A—0 070 074 (European Patent Application 82200868.6), R. A. Llenado, filed on July 12, 1982, having a hydrophobic group containing from 6 to 30 carbon atoms, preferably from 10 to 16 carbon atoms and a polysaccharide, e.g., a polyglycoside, hydrophilic group containing from 1½ to 10, preferably from 1½ to 3, most preferably from 1.6 to 2.7 saccharide units. Any reducing saccharide containing 5 or 6 carbon atoms can be used, e.g. glucose, galactose and galactosyl moieties can be substituted for the glucosyl moieties. (Optionally the hydrophobic group is attached at the 2, 3, 4 positions thus giving a glucose or galactose as opposed to a glucoside or galctoside.) The intersaccharide bonds can be, e.g., between the one portion of the additional saccharide units and the 2-, 3-, 4-, and/or 6 positions on the preceding saccharide units.

Optionally, and less desirably, there can be a polyalkylene-oxide chain joining the hydrophobic moiety and the polysaccharide moiety. The preferred alkyleneoxide is ethylene oxide. Typical hydrophobic groups include alkyl groups, either saturated or unsaturated, branched or unbranched containing from 8 to 18, preferably from 10 to 16, carbon atoms. Preferably, the alkyl group is a straight chain saturated alkyl group. The alkyl group can contain up to 3 hydroxy groups and/or the polyalkyleneoxide chain can contain up to 10, preferably less than 5, most preferably 0, alkyleneoxide moieties. Suitable alkyl polysaccharides are octyl, nonyldecyl, undecyldodecyl, tridecyl, tetradecyl, pentadecyl, hexadecyl, heptadecyl, and octadecyl, di-, tri-, tetra-, penta-, and hexaglucosides, galactosides, lactosides, glucoses, fructosides, fructoses, and/or galactoses. Suitable mixtures include coconut alkyl, di-, tri-, tetra-, and pentaglucosides and tallow alkyl tetra-, penta-, and hexaglucosides.

The preferred akylpolyglycosides have the formula

$$R^2O(C_nH_{2n}O)_t(glycosyl)_x$$

wherein $R^2$ is selected from the group consisting of alkyl, alkylphenyl, hydroxyalkyl, hydroxyalkylphenyl, and mixtures thereof in which the alkyl groups contain from 10 to 18, preferably from 12 to 14, carbon atoms; n is 2 to 3, preferably 2; t is from 0 to 10, preferably 0; and x is from $1\frac{1}{2}$ to 10, preferably from $1\frac{1}{2}$ to 3, most preferably from 1.6 to 2.7. The glycosyl is preferably derived from glucose. To prepare these compounds, the alcohol or alkylpolyethoxy alcohol is formed first and then reacted with glucose, or a source of glucose, to form the glucoside (attachment at the 1-position). The additional glycosyl units can then be attached between their 1-position and the preceding glycosyl units 2-, 3-, 4- and/or 6-position, preferably predeominately the 2-position.

7. Fatty acid amide detergent surfactants having the formula:

$$R^6-\overset{\overset{O}{\|}}{C}-NR^7{}_2$$

wherein $R^6$ is an alkyl group containing from 7 to 21 (preferably from 9 to 17) carbon atoms and each $R^7$ is selected from the group consisting of hydrogen, $C_1$—$C_4$ alkyl, $C_1$—$C_4$ hydroxyalkyl, and —$(C_2H_4O)_xH$ where x varies from 1 to 3.

Preferred amides are $C_8$—$C_{20}$ ammonia amides, monoethanolamides, diethanolamides, and isopropanol amides.

B. *Anionic Surfactants*

Anionic surfactants suitable in detergent compositions of the present invention are generally disclosed in U.S. Patent 3,929,678 to Laughlin et al., issued December 30, 1975 at column 23, line 58 through column 29, line 23. Classes of anionic surfactants included are:

1. Ordinary alkali metal soaps such as the sodium, potassium, ammonium and alkylolammonium salts of higher fatty acids containing from 8 to 24 carbon atoms, preferably from 10 to 20 carbon atoms.

2. Water-soluble salts, preferably the alkali metal, ammonium and alkylolammonium salts, of organic sulfuric reaction products having in their molecular structure an alkyl group containing from 10 to 20 carbon atoms and a sulfonic acid or sulfuric acid ester group. (Included in the term "alkyl" is the alkyl portion of acyl groups.)

Examples of this group of anionic surfactants are the sodium and potassium alkyl sulfates, especially those obtained by sulfating the higher alcohols ($C_8$—$C_{18}$ carbon atoms) such as those produced by reducing the glycerides of tallow or coconut oil; and the sodium and potassium alkylbenzene sulfonates in which the alkyl group contains from 9 to 15 carbon atoms, in straight chain or branched chain configuration, e.g., those of the type described in U.S. Patents 2,220,099 and 2,477,383. Especially valuable are linear straight chain alkylbenzene sulfonates in which the average number of carbon atoms in the alkyl group is from 11 to 13, abbreviated as $C_{11}$—$C_{13}$LAS.

Preferred anionic surfactants of this type are the alkyl polyethoxylate sulfates, particularly those in which the alkyl group contains from 10 to 22, preferably from 12 to 18 carbon atoms, and wherein the polyethoxylate chain contains from 1 to 15 ethoxylate moieties preferably from 1 to 3 ethoxylate moieties. These anionic detergent surfactants are particularly desirable for formulating heavy-duty liquid laundry detergent compositions.

Other anionic surfactants of this type include sodium alkyl glyceryl ether sulfonates, especially those ethers of higher alcohols derived from tallow and coconut oil; sodium coconut oil fatty acid monoglyceride sulfonates and sulfates; sodium of potassium salts of alkyl phenol ethylene oxide ether sulfates containing from 1 to 10 units of ethylene oxide per molecule and wherein the alkyl groups contain from 8 to 12 carbon atoms; and sodium or potassium salts of alkyl ethylene oxide ether sulfates containing 1 to 10 units of ethylene oxide per molecule and wherein the alkyl group contains from 10 to 20 carbon atoms.

Also included are water-soluble salts of esters of alpha-sulfonated fatty acids containing from 6 to 20 carbon atoms in the fatty acid group and from 1 to 10 carbon atoms in the ester group; water-soluble salts of 2-acyloxy-alkane-1-sulfonic acids containing from 2 to 9 carbon atoms in the acyl group and from 9 to 23 carbon atoms in the alkane moiety; alkyl ether sulfates containing from 10 to 20 carbon atoms in the alkyl group and from 1 to 30 moles of ethylene oxide; water-soluble salts of olefin sulfonates containing from 12 to 24 carbon atoms; and beta-alkyloxy alkane sulfonates containing from 1 to 3 carbon atoms in the alkyl group and from 8 to 20 carbon atoms in the alkane moiety.

3. Anionic phosphate surfactants.

4. N-alkyl substituted succinamates.

C. *Ampholytic Surfactants*

Ampholytic surfactants can be broadly described as aliphatic derivatives of secondary or tertiary amines, or aliphatic derivatives of heterocyclic secondary and tertiary amines in which the aliphatic radical

can be straight chain or branched and wherein one of the aliphatic substituents contains from 8 to 18 carbon atoms and at least one contains an anionic water-solubilizing group, e.g. carboxy, sulfonate, sulfate. See U.S. Patent 3,929,678 to Laughlin et al., issued December 30, 1975 at column 19, lines 18—35 for examples of ampholytic surfactants.

D. *Zwitterionic Surfactants*

Zwitterionic surfactants can be broadly described as derivatives of secondary and tertiary amines, derivatives of heterocyclic secondary and tertiary amines, or derivatives of quaternary ammonium, quaternary phosphonium or tertiary sulfonium compounds. See U.S. Patent 3,929,678 to Laughlin et al., issued December 30, 1975 at column 19, line 38 through column 22, line 48 for examples of zwitterionic surfactants.

E. *Cationic Surfactants*

Cationic surfactants can also be included in detergent compositions of the present invention. Suitable cationic surfactants include the quaternary ammonium surfactants having the formula:

$$[R^2(Or^3)_y][R^4(Or^3)_y]_2R^5N^+X^-$$

wherein $R^2$ is an alkyl or alkyl benzyl group having from 8 to 18 carbon atoms in the alkyl chain; each $R^3$ is selected from the group consisting of $-CH_2CH_2-$, $-CH_2CH(CH_3)-$, $-CH_2CH(CH_2OH)-$, $-CH_2CH_2CH_2-$, and mixtures thereof; each $R^4$ is selected from the group consisting of $C_1$—$C_4$ alkyl, $C_1$—$C_4$ hydroxyalkyl, benzyl, ring structures formed by joining the two $R^4$ groups, $-CH_2CHOHCHOHCOR^6CHOHCH_2OH$ wherein $R^6$ is any hexose or hexose polymer having a molecular weight less than 1000, and hydrogen when y is not 0; $R^5$ is the same as $R^4$ or is an alkyl chain wherein the total number of carbon atoms of $R^2$ plus $R^5$ is not more than 18; each y is from 0 to 10 and the sum of the y values is from 0 to 15; and X is any compatible anion.

Preferred of the above are the alkyl quaternary ammonium surfactants, especially the mono-long chain alkyl surfactants described in the above formula when $R^5$ is selected from the same groups as $R^4$. The most preferred quaternary ammonium surfactants are the chloride, bromide and methylsulfate $C_8$—$C_{16}$ alkyl trimethylammonium salts, $C_8$—$C_{16}$ alkyl di(hydroxyethyl)methylammonium salts, the $C_8$—$C_{16}$ alkyl hydroxyethyldimethylammonium salts, and $C_8$—$C_{16}$ alkoxypropyl trimethylammonium salts. Of the above, decyl trimethylammonium methylsufate, lauryl trimethylammonium chloride, myristyl trimethylammonium bromide and coconut trimethylammonium chloride and methylsulfate are particularly preferred.

Detergent Builders

Detergent compositions of the present invention can optionally comprise inorganic or organic detergent builders to assist in mineral hardness control. These builders can comprise from 0 to 80% by weight of the composition. When included, these builders typically comprise up to 60% by weight of the detergent composition. Built liquid formulations preferably comprise from 10 to 25% detergent builder while built granular formulations preferably comprise from 10 to 50% by weight detergent builder.

Suitable detergent builders include crystalline aluminosilicate ion exchange materials having the formula:

$$Na_z[(AlO_2)_z\cdot(SiO_2)_y\cdot xH_2O$$

wherein z and y are at least 6, the mole ratio of z to y is from 1.0 to 0.5; and x is from 10 to 264. Amorphous hydrated aluminosilicate materials useful herein have the empirical formula

$$M_z(zAlO_2\cdot ySiO_2)$$

wherein M is sodium, potassium, ammonium or substituted ammonium, z is from 0.5 to 2; and y is 1; this material having a magnesium ion exchange capcity of at least 50 milligram equivalents of $CaCO_3$ hardness per gram of anhydrous aluminosilicate.

The aluminosilicate ion exchange builder materials are in hydrated form and contain from 10% to 28% of water by weight if crystalline, and potentially even higher amounts of water if amorphous. Highly preferred crystalline aluminosilicate ion exchange materials contain from 18% to 22% water in their crystal matrix. The preferred crystalline aluminosilicate ion exchange materials are further characterized by a particle size diameter of from 0.1 μm to 10 μm. Amorphous materials are often smaller, e.g., down to less than 0.01 μm. More preferred ion exchange materials have a particle size diameter of from 0.2 μm to 4 μm. The term "particle size diameter" represents the average particle size diameter of a given ion exchange material as determined by conventional analytical techniques such as, for example, microscopic determination utilizing a scanning electron microscope. The crystalline aluminosilicate ion exchange materials are usually further charcterized by their calcium ion exchange capacity, which is at least 200 mg equivalent of $CaCO_3$ water hardness/g of aluminosilicate, calculated on an anhydrous basis, and which

generally is in the range of from 300 mg eq/g to 352 eq/g. The aluminosilicate ion exchange materials are still further characterized by their calcium ion exchange rate which is at least 2 grains $Ca^{++}$/3.785 l(gallon)/minute/gram/3.785 l(gallon) of aluminosilicate (anhydrous basis), and generally lies within the range of from 2 grains/3.785 l(gallon)/minute/gram/3.785 l(gallon) to 6 grains/3.785 l(gallon)/minute/gram/3.785 l(gallon), based on calcium ion hardness. Optimum aluminosilicates for builder purposes exhibit a calcium ion exchange rate of at least 4 grains/3.785 l(gallon)/minute/gram/3.785 l(gallon).

The amorphous aluminosilicate ion exchange materials usually have a $Mg^{++}$ exchange capcity of at least 50 mg eq $CaCO_3$/g (12 mg $Mg^{++}$/g) and a $Mg^{++}$ exchange rate of at least 1 grain/3.785 l(gallon)/minute/gram/3.785 l(gallon). Amorphous materials do not exhibit an observable diffraction pattern when examined by Cu radiation (0.154 nm (1.54 Angstron Units)).

Useful aluminosilicate ion exchange materials are commercially available. These aluminosilicates can be crystalline or amorphous in structure and can be naturally-occurring aluminosilicates or synthetically derived. A method for producing aluminosilicate ion exchange materials is disclosed in U.S. Patent 3,985,669 to Krummel, et al issued October 12, 1976. Preferred synthetic crystalline aluminosilicate ion exchange materials useful herein are available under the designations Zeolite A, Zeolite P (B), and Zeolite X. In an especially preferred embodiment, the crystalline aluminosilicate ion exchange material has the formula

$$Na_{12}[(AlO_2)_{12}(SiO_2)_{12}]\cdot xH_2O$$

wherein x is from 20 to 30, especially 27.

Other examples of detergency builders include the various water-soluble, alkali metal, ammonium or substituted ammonium phosphates, polyphosphates, phosphonates, polyphosphonates, carbonates, silicates, borates, polyhydroxysulfonates, polyacetates, carboxylates, and polycarboxylates. Preferred are the alkali metal, especially sodium, salts of the above.

Specific examples of inorganic phosphate builders are sodium and potassium tripolyphosphate, pyrophosphate, polymeric metaphate having a degree of polymerization of from 6 to 21, and orthophosphate. Examples of polyphosphonate builders are the sodium and potassium salts of ethylene-1,1-diphosphonic acid, the sodium and potassium salts of ethane 1-hydroxy-1,1-diphosphonic acid and the sodium and potassium salts of ethane, 1,1,2-triphosphonic acid. Other phosphorus builder compounds are disclosed in U.S. Patents 3,159,581; 3,213,030; 3,422,021; 3,422,137; 3,400,176 and 3,400,148.

Examples of nonphosphorus, inorganic builders are sodium and potassium carbonate, bicarbonate, sesquicarbonate, tetraborate decahydrate, and silicate having a mole ratio of $SiO_2$ to alkali metal oxide of from 0.5 to 4.0, preferably from 1.0 to 2.4.

Useful water-soluble, nonphosphorus organic builders include the various alkali metal, ammonium and substituted ammonium polyacetates, carboxylates, polycarboxylates and polyhydroxysulfonates. Examples of polyacetate and polycarboxylate builders are the sodium, potassium lithium, ammonium and substituted ammonium salts of ethylenediamine tetraacetic acid, nitrilotriacetic acid, oxydisuccinic acid, mellitic acid, benzene polycarboxylic acids, and citric acid.

Highly preferred polycarboxylate builders are disclosed in U.S. Patent No. 3,308,067 to Diehl, issued March 7, 1967. Such materials include the water-soluble salts of homo- and copolymers of aliphatic carboxylic acids such as maleic acid, itaconic acid, mesaconic acid, fumaric acid, aconitic acid, citraconic acid and methylenemalonic acid.

Other builders include the carboxylated carbohydrates disclosed in U.S. Patent 3,723,322 to Diehl issued March 28, 1973.

Other useful builders are sodium and potassium carboxymethyloxymalonate, carboxymethyloxy-succinate, cis-cyclohexanehexacarboxylate, cis-cyclopentanetetracarboxylate phloroglucinol trisulfonate, water-soluble polyacrylates (having molecular weights of from 2,000 to 200,000 for example), and the copolymers of maleic anhydride with vinyl methyl ether or ethylene.

Other suitable polycarboxylates are the polyacetal carboxylates disclosed in U.S. Patent 4,144,226, to Crutchfield et al. issued March 13, 1979, and U.S. Patent 4,246,495, to Crutchfield et al., issued March 27, 1979. These polyacetal carboxylates can be prepared by bringing together under polymerization conditions an ester of glyoxylic acid and a polymerization initiator. The resulting polyacetal carboxylate ester is then attached to chemically stable end groups to stabilize the polyacetal carboxylate against rapid depolymerization in alkaline solution, converted to the corresponding salt, and added to a surfactant.

Other useful detergency builder materials are the "seeded builder" compositions disclosed in Belgian Patent No. 798,856, issued October 29, 1973. Specific examples of such seeded builder mixtures are: 3:1 wt mixtures of sodium carbonate and calcium carbonate having 5 µm particle diameter; 2.7:1 wt. mixtures of sodium sesquicarbonate and calcium carbonate having a particle diameter of 0.5 µm; 20:1 wt mixtures of sodium sesquicarbonate and calcium hydroxide having a particle diameter of 0.01 µm; and a 3:3.1 wt mixture of sodium carbonate, sodium aluminate and calcium oxide having a particle diameter of 5 µm.

Other Optional Detergent Ingredients

Other optional ingredients which can be included in detergent compositions of the present invention, in their conventional art-established levels for use (i.e., from 0 to 20%), include solvents, bleaching agents,

bleach activator, soil suspending agents, corrosion inhibitors, dyes, fillers, optical brighteners, germicides, pH adjusting agents (monoethanolamine, sodium carbonate or sodium hydroxide), enzymes, enzyme-stabilizing agents, perfumes, fabric softening components or static control agents.

Detergent Formulations

Granular formulations embodying the detergent compositions of the present invention can be formed by conventional techniques, i.e., by slurrying the individual components in water and then atomizing and spray-drying the resultant mixture, or by pan or drum granulation of the ingredients. Granular formulations preferably comprise from 10 to 30% detergent surfactant, usually anionic.

Liquid formulations embodying the detergent compositions can be built or unbuilt. If unbuilt, these compositions conventionally contain 15 to 50% total surfactant, from 0 to 10% of an organic base such as a mono-, di-, or tri-alkanol amine, a neutralization system such as an alkali metal hydroxide and a lower primary alcohol such as ethanol or isopropanol, and 20 to 80% water. Such compositions are normally homogeneous single phase liquids of low viscosity (100 to 150 mPa·s at 23.9°C (centipoise at 75°F)).

Built liquid detergent compositions can be in the form of single phase liquids provided that the builder is solubilized in the mixture at its level of use. Such lqiuids conventionally contain 10 to 25% total surfactant, 10 to 25% builder which can be organic or inorganic, 3 to 10% of a hydrotrope system and 40 to 77% water. Liquids of this type also have a low viscosity (100 to 150 mPa·s at 23.9°C (centipoise at 75°F)). Built liquid detergents incorporating components that form heterogeneous mixtures (or levels of builder that cannot be completely dissolved) can also comprise detergent compositions of the present invention. Such liquids conventionally employ viscosity modifiers to produce systems having plastic shear characteristics to maintain stable dispersions and to prevent phase separation or solid settlement.

Near Neutral Wash pH Detergent Formulations

While the detergent compositions of the present invention are operative within a wide range of wash pHs (e.g. from 5 to 12), they are particularly suitable when formulated to provide a near neutral wash pH, i.e. an initial pH of from 6.0 to 8.5 at a concentration of from 0.1 to 2% by weight in water at 20°C. Near neutral wash pH formulations are better for enzyme stability and for preventing stains from setting. In such formulations, the wash pH is preferably from 7.0 to 8.5, and more preferably from 7.5 to 8.0.

Preferred near neutral wash pH detergent formulations are disclosed in EP—A—0 095 205 (European Patent Application 83200688.6), J. H. M. Wertz and P. C. E. Goffinet, filed on May 16, 1983. These preferred formulations comprise:

(a) from 2 to 60% (preferably from 10 to 25%) by weight of an anionic synthetic surfactant as previously defined;

(b) from 0.25 to 12% (preferably from 1 to 4%) by weight of a cosurfactant selected from the group consisting of:

(i) quaternary ammonium surfactants having the formula:

$$[R^2(OR^3)_y][R^4(OR^3)_y]_2R^5N^+X^-$$

wherein $R^2$, each $R^3$, $R^4$, $R^5$ , X and y are as previously defined; each y is from 0 to 10 and the sum of the y values is from 0 to 15; and X is any compatible anion;

(ii) diquaternary ammonium surfactants having the formula:

$$[R^2(OR^3)_y][R^4(OR^3)_y]_2N^+R^3N^+R^5[R^4(OR^3)_y]_2\ (X^-)_2$$

wherein $R^2$, $R^3$, $R^4$, y and X are as defined above; particularly preferred are the $C_8$—$C_{16}$ alkyl pentamethyl-ethylenediamine chloride, bromide and methylsulfate salts;

(iii) amine surfactants having the formula:

$$[R^2(OR^3)_y][R^4(OR^3)_y]R^5N$$

wherein $R^2$, $R^3$, $R^4$, $R^5$ and y are as defined above; particularly preferred are the $C_{12}$—$C_{16}$ alkyl dimethyl amines;

(iv) diamine surfactants having the formula:

$$[R^2(OR^3)_y][R^4(OR^3)_y]NR^3NR^5[R^4(OR^3)_y]$$

wherein $R^2$, $R^3$, $R^4$, $R^5$ and y are as defined above; particularly preferred are the $C_{12}$—$C_{16}$ alkyl dimethyl diamines;

(v) amine oxide surfactants having the formula:

$$[R^2(OR^3)_y][R^4(OR^3)_y]R^5N\rightarrow O$$

wherein $R^2$, $R^3$, $R^4$, $R^5$ and y are as defined above; particularly preferred are the $C_{12}$—$C_{16}$ alkyldimethyl amine oxides; and

(vi) di(amine oxide) surfactants having the formula:

$$[R^2(OR^3)_y][R^4(OR^3)_y]\underset{\downarrow}{\overset{}{N}}R^3\underset{\downarrow}{N}R^5[R^4(OR^3)_y] \quad ,$$
$$\qquad O \quad O$$

wherein $R^2$, $R^3$, $R^4$, $R^5$ and y are as defined above; preferred are the $C_{12}$—$C_{16}$ alkyl trimethylethylene di(amine oxides) and

(c) from 5% to 40% by weight (preferably 7 to 30% by weight, and most preferably from 10 to 20% by weight) of a fatty acid containing from 10 to 22 carbon atoms (preferably a $C_{10}$—$C_{14}$ saturated fatty acid or mixture thereof); the mole ratio of the anionic surfactant to the cosurfactant being at least 1 and preferably from 2:1 to 20:1.

Such compositions also preferably contain from 3 to 15% by weight of an ethoxylated alcohol or ethoxylated alkyl phenol (nonionic surfactants) as previously defined. Highly preferred compositions of this type also preferably contain from 2 to 10% by weight of citric acid and minor amounts (e.g., less than 20% by weight) of neutralizing agents, buffering agents, phase regulants, hydrotropes, enzymes, enzyme stabilizing agents, polyacids, suds regulants, opacifiers, antioxidants, bactericides, dyes, perfumes and brighteners, such as those described in U.S. Patent 4,285,841 to Barrat et al., issued August 25, 1981.

Clay Soil Removal/Anti-Redeposition Properties of Various Ethoxylated Amines

A. Experimental Method

1. *Clay Soil Removal*

Clay soil removal comparisons were conducted in a standard 1 liter Tergotometer employing water of 7 grain hardness (3:1 $Ca^{++}$:$Mg^{++}$) and a temperature of 37.8°C (100°F). Soiled swatches were washed in the Tergotometer for 10 minutes and rinsed twice with water (7 grain hardness) at 23.9°C (70°F) for 2 minutes.

65% polyester/35% cotton blend fabric was used for the swatches. The swatches were 12.7 cm by 12.7 cm (5 inches by 5 inches) in size and were soiled by dipping in an aqueous slurry of local clay and subsequently baked to remove the water. The dipping and baking was repeated 5 times.

One wash employed 2000 ppm of a control liquid detergent composition containing the following surfactants:

| Surfactant | Amount (%) |
|---|---|
| Sodium $C_{14}$—$C_{15}$ alkyl ethoxysulfate | 10.8 |
| $C_{13}$ linear alkylbenzene sulfonic acid | 7.2 |
| $C_{12}$—$C_{13}$ alcohol polyethoxylate (6.5) | 6.5 |
| $C_{12}$ alkyl trimethylammonium chloride | 1.2 |

A second wash used the same detergent composition but also containing an ethoxylated amine at 20 ppm. Neither composition contained optical brighteners. The product washes approximated a conventional home use laundry situation. After laundering, the swatches were dried in a mini-dryer.

The swatches were graded before and after washing on a Gardner Whiteness meter reading the L, a, and B coordinates. Whiteness (W) was calculated as:

$$W = \frac{7L^2 - 40Lb}{700}$$

The clay soil removal performance of each detergent composition was determined by finding the difference in whiteness (W) before and after washing as:

$$\Delta W = W_{after} - W_{before}$$

The improvement in clay soil removal performance of the composition containing the ethoxylated amine was measured as the difference in W values ($\Delta^2 W$) relative to the control composition.

2. *Anti-Redeposition*

Anti-redeposition comparisons were conducted in a 5 pot Automatic Miniwasher (AMW) employing 7 grain hardness water and temperature of 29.4°C (95°F). Test swatches were washed for 10 minutes and

rinsed twice with water (7 grain hardness) at 23.9°C (75°F) for 2 minutes.

After the AMW pots were filled with 6 liters of water each, the detergent composition to be tested (control or containing 20 ppm ethoxylated amine as in clay soil removal test) was added and agitated for 2 minutes. A background soil mixture (200 ppm artificial body soil, 100 ppm vacuum cleaner soil and 200 ppm clay soil) was then added and agitated for an additional 3 minutes. Three 12.7 cm (5 inch) square test swatches (50% polyester/50% cotton T-shirt material) were then added, along with two 80% cotton/20% polyester terry clothes and two 27.9 cm (11 inch) square swatches of 100% polyester knit fabric. The 10 minute wash cycle commenced at this point.

Following the rinse cycle, the test swatches were dried in a mini-dryer. Gardner Whiteness meter readings (L, a and b) were then determined for the three test swatches. Anti-redeposition performance (ARD) was then calculated according to the following equation:

$$ARD = \frac{7L^2 - 40Lb}{700}$$

The ARD values for the three test swatches were then averaged. The improvement in anti-redeposition performance of the composition containing the ethoxylated amine was measured as the difference in ARD values (ΔARD) relative to the control composition.

B. Test Results

The results from testing the clay-soil removal and anti-redeposition performance of various ethoxylated amines is shown in the following Table:

| Amine * Type | Amine M.W. | Degree of Ethoxylation | Δ ²W | ΔARD |
|---|---|---|---|---|
| TEA | 17 | 5 | 1.6 | 2.4 |
| | | 12 | 4.6 | 5.0 |
| | | 17 | 7.4 | - |
| | | 26 | 7.6 | 11.8 |
| | | 35 | 7.4 | - |
| EDA | 60 | 3 | 1.7 | 1.8 |
| | | 8 | 2.9 | 8.4 |
| | | 12 | 5.1 | 9.4 |
| | | 24 | 6.1 | 13.1 |
| | | 42 | 5.5 | 12.9 |
| PDA | 74 | 3 | 2.4 | 3.2 |
| | | 6 | 2.4 | 6.2 |
| | | 13 | 6.1 | 10.7 |
| | | 24 | 5.8 | 11.4 |
| | | 43 | 5.4 | 12.4 |
| HMDA | | 3 | - | 13.3 |
| | | 6 | - | 16.4 |

| Amine * Type | Amine M.W. | Degree of Ethoxylation | Δ ²W | Δ ARD |
|---|---|---|---|---|
| PEA | 103 | 3 | 2.4 | 5.1 |
| | | 6 | 4.0 | 10.0 |
| | | 12 | 6.5 | - |
| | | 24 | 7.7 | 17.4 |
| PEA | 189 | 3 | 5.0 | 10.6 |
| | | 12 | 5.1 | 14.8 |
| | | 15 | 10.8 | 16.4 |
| | | 18 | 7.3 | 17.2 |
| | | 22 | 8.6 | 17.3 |
| | | 37 | 8.5 | 16.3 |
| | | 80 | 6.3 | 16.1 |
| PEA | 309 | 2 | -2.4 | - |
| | | 12 | 6.1 | - |
| | | 18 | 9.1 | - |
| | | 24 | 8.7 | 20.7 |
| PEI | 600 | 3 | 0.6 | 17.9 |
| | | 12 | 5.6 | 20.5 |
| | | 24 | 6.0 | 20.9 |
| | | 42 | 7.7 | 20.5 |
| PEI | 1800 | 5 | 1.6 | 14.4 |
| | | 13 | 3.1 | 17.7 |
| | | 29 | 5.5 | 16.6 |
| PPI | 20,000 | 6 | 0.6 | 5.0 |
| | | 24 | -1.3 | 11.6 |
| | | 42 | - | 13.8 |

*TEA = triethanolamine, EDA = ethylenediamine, PDA = propylenediamine, HMDA = hexamethylenediamine, PEA = polyethyleneamine, PEI = polyethyleneimine, PPI = polypropyleneimine

For comparison, PEG 6000 (polyethylene glycol having M.W. of 6000) has a $\Delta^2W$ value of 4.9 and a ΔARD value of 8.9.

## Specific Embodiments of Detergent Compositions According to the Present Invention

### Embodiment I

The following embodiments illustrate, but are not limiting of, detergent compositions of the present invention:

A granular detergent composition is as follows:

| Component | Wt.% |
|---|---|
| $PEI_{600}E_{24}$* | 1.0 |
| Sodium $C_{14}$—$C_{15}$ alkylethoxysulfate | 10.7 |
| $C_{13}$ linear alkyl benzene sulfonic acid | 4.3 |
| $C_{12}$—$C_{14}$ alkylpolyethoxylate (6) | 0.5 |
| Sodium toluene sulfonate | 1.0 |
| Sodium tripolyphosphate | 32.9 |
| Sodium carbonate | 20.3 |
| Sodium silicate | 5.8 |
| Minors and water | Balance to 100 |

* PEI having M.W. of 600 and degree of ethoxylation of 24.

The components are added together with continuous mixing to form an aqueous slurry which is then spray dried to form the composition.

Embodiment II

A liquid detergent composition is as follows:

| Component | Wt.% |
|---|---|
| $PEA_{189}E_{17}$* | 1.0 |
| Sodium $C_{14}$—$C_{15}$ alkyl polyethoxy (2.5) sulfate | 8.3 |
| $C_{12}$—$C_{14}$ alkyl dimethyl amine oxide | 3.3 |
| Sodium toluene sulfonate | 5.0 |
| Monoethanolamine | 2.3 |
| Sodium nitrilotriacetate | 18.2 |
| Minors and water | Balance to 100 |

* PEA having M.W. of 189 and degree of ethoxylation of 17.

The components are added together with continuous mixing to form the composition.

Embodiments III and IV

Liquid detergent compositions are as follows:

| | Wt.% | |
|---|---|---|
| Component | III | IV |
| $PEA_{189}E_{17}$ | 1.5 | 1.5 |
| $C_{14}$—$C_{15}$ alkylethoxysulfuric acid | 10.8 | — |
| $C_{14}$—$C_{15}$ alkylpolyethoxy (2.25) sulfuric acid | — | 10.8 |
| $C_{13}$ linear alkylbenzene sulfonic acid | 7.2 | 7.2 |
| $C_{12}$ alkyl trimethylammonium chloride | 1.2 | 1.2 |

| Component | Wt.% III | Wt.% IV |
|---|---|---|
| $C_{12-13}$ alcohol polyethoxylate (6.5) | 6.5 | 6.5 |
| Coconut fatty acid | 15.0 | 15.0 |
| Citric acid monohydrate | 6.9 | 4.0 |
| Diethylenetriamine pentaacetic acid | 0.9 | 0.9 |
| Protease enzyme | 0.8 | 0.8 |
| Amylase enzyme | 0.3 | 0.3 |
| Monoethanolamine | 13.6 | 2.0 |
| Triethanolamine | 3.0 | 4.0 |
| Sodium hydroxide | — | 2.0 |
| Potassium hydroxide | — | 2.8 |
| 1,2-Propanediol | 5.0 | 5.0 |
| Ethanol | 3.0 | 7.0 |
| Sodium formate | 1.0 | 1.0 |
| Sodium toluene sulfonate | 5.0 | — |
| Minors and water | Balance to 100 | |

Embodiment IV is prepared by adding the components together with continuous mixing, in the following order to produce a clear liquid: a paste premix of the alkylbenzene sulfonic acid, 0.9 parts of the sodium hydroxide, propylene glycol, and 2.3 parts of the ethanol; a paste premix of the alkylpolyethoxysulfuric acid, 1.1 parts of the sodium hydroxide and 3.1 parts of the ethanol; alcohol polyethoxylate; premix of monoethanolamine, triethanolamine and brighteners; 1.5 parts potassium hydroxide; balance of the ethanol; citric acid; formate; 1.4 parts potassium hydroxide; fatty acid; pentaacetic acid; alkyl trimethylammonium chloride; adjust pH to about 8.4 with potassium hydroxide, water or citric acid; enzymes; $PEA_{189}E_{17}$ (50% aqueous solution); and perfume. Embodiment III can be prepared in a similar manner.

Embodiment V

A liquid detergent composition is formulated as follows:

| Component | Wt. % |
|---|---|
| $PEA_{189}E_{17}$ | 1.0 |
| Sodium $C_{12}$ alkylpolyethoxy (3) sulfate | 12.6 |
| $C_{12}$—$C_{13}$ alcohol polyethoxylate (6.5) | 23.4 |
| Monoethanolamine | 2.0 |
| Ethanol | 9.0 |
| Citric acid monohydrate | 0.8 |
| Minors and water | Balance to 100 |

The components are added together with continuous mixing to form the composition.

## Claims

1. A detergent composition, which comprises:

(a) from 1 to 75% by weight of a detergent surfactant selected from the group consisting of nonionic, anionic, ampholytic, zwitterionic or cationic detergent surfactants or mixtures thereof; and

(b) from 0.05 to 95% by weight of a water-soluble ethoxylated amine having clay soil removal/anti-redeposition properties selected from the group consisting of

(1) ethoxylated monoamines having the formula:

$$(X—L—)—N—(R^2)_2$$

(2) ethoxylated diamines having the formula:

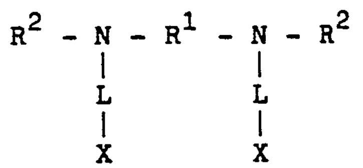

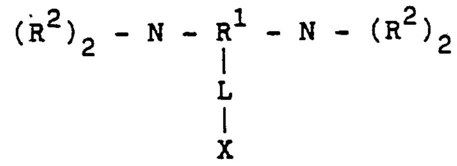

or

$$(X-L-)_2-N-R^1-N-(R^2)_2$$

(3) ethoxylated polyamines having the formula:

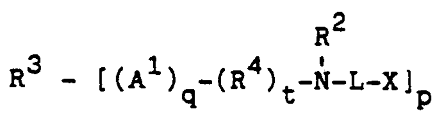

(4) ethoxylated amine polymers having the general formula:

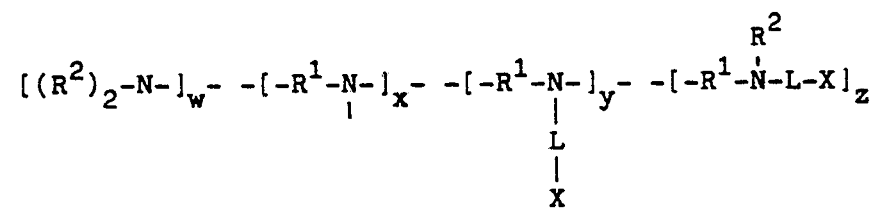

and

(5) mixtures thereof; wherein $A^1$ is

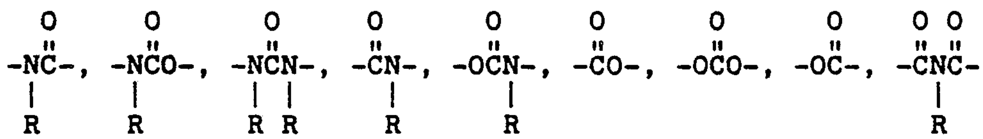

or —O— ;

R is H or $C_1$—$C_4$ alkyl or hydroxyalkyl; $R^1$ is $C_2$—$C_{12}$ alkylene, hydroxyalkylene, alkenylene, arylene or alkarylene, or a $C_2$—$C_3$ oxyalkylene moiety having from 2 to 20 oxyalkylene units provided that no O—N bonds are formed; each $R^2$ is $C_1$—$C_4$ alkyl or hydroxyalkyl, the moiety —L—X, or two $R^2$ together form the moiety $—(CH_2)_r—A^2—(CH_2)_s—$, wherein $A^2$ is —O— or $—CH_2—$, r is 1 or 2, s is 1 or 2, and r + s is 3 or 4; X is a nonionic group, an anionic group or mixture thereof; $R^3$ is a substituted $C_3$—$C_{12}$ alkyl, hydroxyalkyl, alkenyl, aryl, or alkaryl group having p substitution sites; $R^4$ is $C_1$—$C_{12}$ alkylene, hydroxyalkylene, alkenylene, arylene or alkarylene, or a $C_2$—$C_3$ oxyalkylene moiety have from 2 to 20 oxyalkylene units provided that no O—O or O—N bonds are formed; L is a hydrophilic chain which contains the polyoxyalkylene moiety $—[(R^5O)_m(CH_2CH_2O)_n]—$, wherein $R^5$ is $C_3$—$C_4$ alkylene or hydroxyalkylene and m and n are numbers such that the moiety $—(CH_2CH_2O)_n—$ comprises at least 50% by weight of said polyoxyalkylene moiety; for said monoamines, m is from 0 to 4, and n is at least 12; for said diamines, m is from 0 to 3, and n is at least 6 when $R^1$ is $C_2$—$C_3$ alkylene, hydroxyalkylene, or alkenylene, and at least 3 when $R^1$ is other than $C_2$—$C_3$ alkylene, hydroxyalkylene or alkenylene; for said polyamines and amine polymers, m is from 0 to 10 and n is at least 3; p is from 3 to 8; q is 1 or 0; t is 1 or 0, provided that t is 1 when q is 1; w is 1 or 0; x + y + z is at least 2; and y + z is at least 2.

2. A composition according to Claim 1 wherein $R^1$ is $C_2$—$C_6$ alkylene.

3. A composition according to Claim 2 wherein $R^1$ is $C_2$—$C_3$ alkylene.

4. A composition according to Claim 3 wherein each $R^2$ is —L—X.

5. A composition according to Claim 4 wherein said ethoxylated amine is an ethoxylated monoamine.

6. A composition according to Claim 5 wherein n is at least 15.

7. A composition according to Claim 6 wherein n is from 15 to 35.

8. A composition according to Claim 6 wherein L consists entirely of the moiety $—CH_2CH_2O)_n^-$.

9. A composition according to Claim 3 wherein said ethoxylated amine is an ethoxylated diamine.

10. A composition according to Claim 9 wherein n is at least 12.

11. A composition according to Claim 10 wherein n is from 12 to 42.

12. A composition according to Claim 10 wherein L consists entirely of the moiety $—(CH_2CH_2O)_n^-$.

13. A composition according to Claim 4 wherein said ethoxylated amine is an ethoxylated amine polymer and $R^1$ is $C_2$—$C_3$ alkylene.

14. A composition according to Claim 13 wherein $R^1$ is ethylene and L consists entirely of the moiety $—(CH_2CH_2O)_n—$.

15. A composition according to Claim 14 wherein n is at least 12.

16. A composition according to Claim 15 wherein said ethoxylated amine polymer is an ethoxylated polyethyleneamine having a molecular weight of from 140 to 310 prior to ethoxylation.

17. A composition according to Claim 15 wherein said ethoxylated amine polymer is an ethoxylated polyethyleneimine having a molecular weight of from 600 to 1800 prior to ethoxylation.

18. A composition according to Claim 4 wherein L consists entirely of the moiety $—(CH_2CH_2O)_n^-$.

19. A composition according to Claim 4 wherein X is a mixture from 0 to 30% of said anionic groups and from 70 to 100% of said nonionic groups.

20. A composition according to Claim 18 wherein X is a nonionic group.

21. A composition according to Claim 20 wherein said nonionic group is H.

22. A composition according to Claim 4 wherein said ethoxylated amine comprises from 0.1 to 10% by weight of the composition.

23. A composition according to Claim 22 wherein said detergent surfactant is selected from the group consisting of nonionic surfactants, anionic surfactants and mixtures thereof.

24. A composition according to Claim 22 formulated to provide an initial pH of from 6.0 to 8.5 at a concentration of from 0.1 to 2% by weight in water at 20°C.

25. A composition according to Claim 24 which further comprises from 5 to 40% by weight of a fatty acid containing from 10 to 22 carbon atoms and wherein said detergent surfactant comprises:

(a) from 2% to 60% by weight of an anionic synthetic surfactant;

(b) from 0.25% to 12% by weight of a cosurfactant selected from the group consisting of:

(i) quaternary ammonium surfactants having the formula:

$$[R^2(OR^3)_y][R^4(OR^3)_y]_2R^5N^+X^-$$

(ii) diquaternary ammonium surfactants having the formula:

$$[R^2(OR^3)_y][R^4(OR^3)_y]_2N^+R^3N^+R^5[R^4(OR^3)_y]_2\ (X^-)_2$$

(iii) amine surfactants having the formula:

$$[R^2(OR^3)_y][R^4(OR^3)_y]R^5N$$

(iv) diamine surfactants having the formula:

$$[R^2(OR^3)_y][R^4(OR^3)_y]NR^3NR^5[R^4(OR^3)_y]$$

(v) amine oxide surfactants having the formula:

$$[R^2(OR^3)_y][R^4(OR^3)_y]R^5N{\rightarrow}O$$

and

(vi) di(amine oxide) surfactants having the formula:

$$[R^2(OR^3)_y][R^4(OR^3)_y]\underset{\substack{\downarrow\\ O}}{N}R^3\underset{\substack{\downarrow\\ O}}{N}R^5[R^4(OR^3)_y]\quad ,$$

wherein $R^2$ is an alkyl or alkyl benzyl group having from 8 to 18 carbon atoms in the alkyl chain; each $R^3$ is selected from the group consisting of $—CH_2CH_2—$, $—CH_2CH(CH_3)—$, $—CH_2CH(CH_2OH)—$, $—CH_2CH_2CH_2—$, and mixtures thereof; each $R^4$ is selected from the group consisting of $C_1$—$C_4$ alkyl, $C_1$—$C_4$ hydroxyalkyl, benzyl, ring structures formed by joining the two $R^4$ groups, $—CH_2CHOHCHOHCOR^6CHOHCH_2OH$, wherein

$R^6$ is hexose or hexose polymer having a molecular weight up to 1000, and hydrogen when y is not 0; $R^5$ is the same as $R^4$ or is an alkyl chain wherein the total number of carbon atoms of $R^2$ plus $R^5$ is not more than 18; each y is from 0 to 10 and the sum of the y values is from 0 to 15; and X is a compatible anion; the mole ratio of said anionic surfactant to said co-surfactant being at least 1.

26. A composition according to Claim 24 wherein said ethoxylated amine is an ethoxylated polyethyleneamine having a molecular weight of from 140 to 310 prior to ethoxylation, L consists entirely of the moiety $-(CH_2CH_2O)_n-$, and n is at least 12.

27. A compound having clay soil removal/anti-redeposition properties which has the formula:

$$X-L-N-(R)_2$$

wherein each R is $C_1-C_4$ alkyl or hydroxyalkyl, the moiety $-L-X$ or the two R together form the moiety $-(CH_2)_r-A-(CH_2)_s-$, wherein A is $-O-$ or $-CH_2-$, r is 1 or 2, s is 1 or 2, and r + s is 3 or 4; L is a hydrophilic chain which contains the polyoxyalkylene moiety $-[(RO_m(CH_2CH_2O)_n]-$ wherein m and n are numbers such that the moiety $-(CH_2CH_2O)_n-$ comprises at least 50% by weight of said polyoxyalkylene moiety; X is a nonionic group, anionic group or mixture thereof; m is from 0 to 4; and n is at least 12.

28. A compound according to Claim 27 wherein each R is the moiety $-L-X$.

29. A compound according to Claim 28 wherein L consists entirely of the moiety $-(CH_2CH_2O)_n^-$.

30. A compound according to Claim 24 wherein n is at least 15.

31. A compound according to Claim 30 wherein n is from 15 to 35.

32. A compound according to Claim 30 wherein X is a nonionic group.

33. A compound according to Claim 32 wherein said nonionic group is H.

34. A water-soluble ethoxylated amine compound having clay soil removal/anti-redeposition properties selected from the group consisting of:

(1) ethoxylated diamines having the formula:

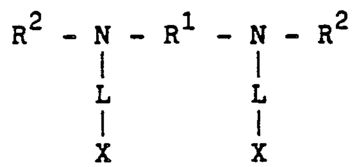

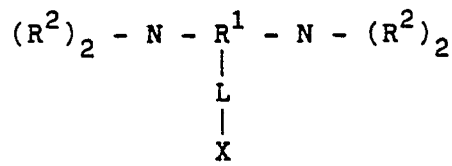

or

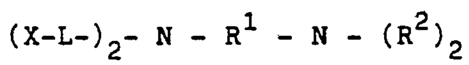

(2) ethoxylated polyamines having the formula:

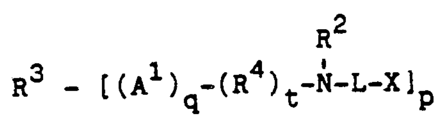

and

(3) mixtures thereof wherein $A^1$ is

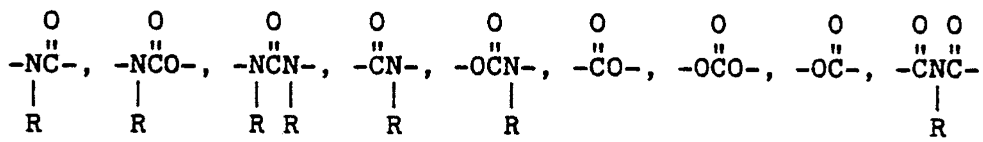

or $-O-$ ;

R is H or $C_1-C_4$ alkyl or hydroxyalkyl; $R^1$ is $C_2-C_{12}$ alkylene, hydroxyalkylene, alkenylene, arylene or alkarylene, or a $C_2-C_3$ oxyalkylene moiety having from 2 to 20 oxyalkylene units provided that no O—N bonds are formed; each $R^2$ is $C_1-C_4$ alkyl or hydroxyalkyl, the moiety $-L-X$, or two $R^2$ together form the moiety $-(CH_2)_r-A^2-(CH_2)_s-$, wherein $A^2$ is $-O-$ or $-CH_2-$, r is 1 or 2, s is 1 or 2, and r + s is 3 or 4; X is a nonionic group, an anionic group or mixture thereof; $R^3$ is a substituted $C_3-C_{12}$ alkyl, hydroxyalkyl, alkenyl, aryl, or alkaryl group having p substitution sites; $R^4$ is $C_1-C_{12}$ alkylene, hydroxyalkylene, alkoxylene, arylene or alkarylene, or a $C_2-C_3$ oxyalkylene moiety having from 2 to 20 oxyalkylene units; L is a hydrophilic chain which contains the polyoxyalkylene moiety $-[(R^5O)_m(CH_2CH_2O)_n]-$, wherein $R^5$ is $C_3-C_4$ alkylene or hydroxyalkylene and m and n are numbers such that the moiety $(CH_2CH_2O)_n$ comprises at least 50% by weight of said polyoxyalkylene moiety; for said diamines, m is from 0 to 3, and n is at least 6 when $R^1$ is $C_2-C_3$ alkylene, hydroxyalkylene, or alkenylene, and at least 3 when $R^1$ is other than $C_2-C_3$ alkylene, hydroxyalkylene or alkenylene; for said polyamines, m is from 0 to 10, and n is at least 3; p is from 3 to 8; q is 1 or 0, t is 1 or 2, provided that t is 1 when q is 1.

35. A compound according to Claim 34 wherein $R^1$ is $C_2$—$C_6$ alkylene.

36. A compound according to Claim 35 wherein $R^1$ is $C_2$—$C_3$ alkylene.

37. A compound according to Claim 35 wherein each $R^2$ is the moiety —L—X.

38. A compound according to Claim 37 wherein m and n are numbers such that the moiety $-(CH_2CH_2O)_n-$ comprises at least 85% by weight of said polyoxyalkylene moiety.

39. A compound according to Claim 38 wherein X is H.

40. A compound according to Claim 39 which is an ethoxylated dicationic compound.

41. A compound according to Claim 40 wherein m is 0 and n is at least 12.

42. A compound according to Claim 34 which is an ethoxylated polycationic compound.

43. A compound according to Claim 42 wherein $R^2$ is a substituted $C_3$—$C_6$ alkyl, hydroxyalkyl or aryl group; $A^1$ is

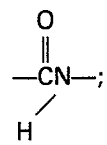

p is from 3 to 6.

44. A compound according to Claim 43 wherein m is from 0 to 10.

45. A compound according to Claim 44 wherein m is 0 and n is at least 12.

**Patentansprüche**

1. Eine Detergenszusammensetzung, welche enthält:

(a) 1 bis 75 Gew.-% eines Detergens-grenzflächenaktiven Mittels, ausgewählt aus der Gruppe, bestehend aus nichtionischen, anionischen, ampholytischen, zwitterionischen oder kationischen Detergens-grenzflächenaktiven Mitteln, oder Gemischen davon; und

(b) 0,05 bis 95 Gew.-% eines wasserlöslichen, ethoxylierten Amins mit Tonschmutzentfernungs/Antiredepositions-Eigenschaften, das aus der Gruppe ausgewählt ist, welche besteht aus:

(1) ethoxylierten Monoaminen der Formel:

$$(X—L—)—N—(R^2)_2$$

(2) ethoxylierten Diaminen der Formel:

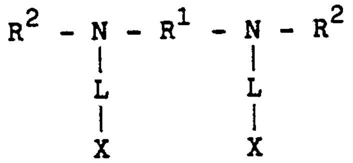

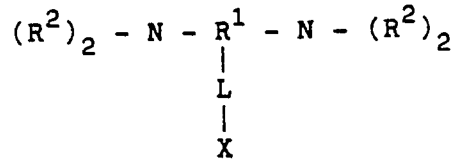

oder

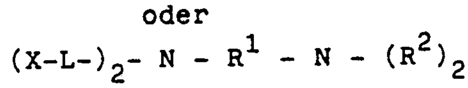

(3) ethoxylierten Polyaminen der Formel:

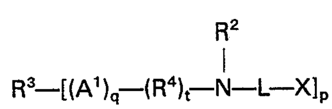

(4) ethoxylierten Aminpolymeren der allgemeinen Formel:

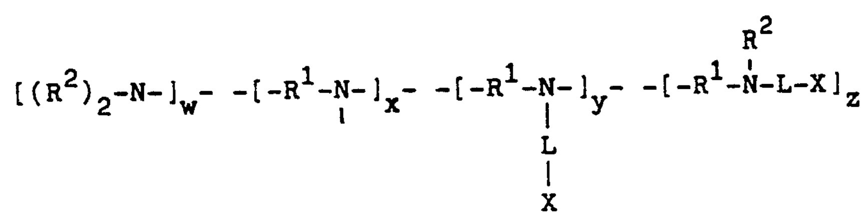

und

(5) Gemischen davon; worin $A^1$

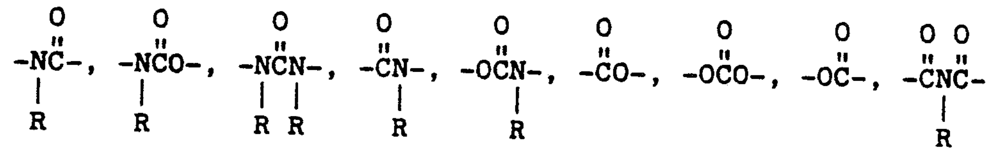

oder -O- ist;

R H oder $C_1$—$C_4$-Alkyl oder Hydroxyalkyl ist; $R^1$ $C_2$—$C_{12}$-Alkylen, Hydroxyalkylen, Alkenylen, Arylen oder Alkarylen oder ein $C_2$—$C_3$-Oxyalkylenrest mit 2 bis 20 Oxyalkyleneinheiten mit der Maßgabe, daß keine O—N-Bindungen gebildet sind, ist; jeder Rest $R^2$ $C_1$—$C_4$-Alkyl oder Hydroxyalkyl, oder der Rest —L—X ist, oder zwei Reste $R^2$ gemeinsam den Rest $—(CH_2)_r—A^2—(CH_2)_s—$ bilden, wobei $A^2$ —O— oder $—CH_2—$ ist, r 1 oder 2 ist, s 1 oder 2 ist, und r + s 3 oder 4 ist; X ein nichtionische Gruppe, eine anionische Gruppe oder ein Gemisch davon ist; $R^3$ eine substituierte $C_3$—$C_{12}$-Alkyl-, Hydroxyalkyl-, Alkenyl-, Aryl- oder Alkarylgruppe mit p Substitutionsstellen ist; $R^4$ $C_1$—$C_{12}$-Alkylen, Hydroxyalkylen, Alkenylen, Arylen oder Alkarylen, oder ein $C_2$—$C_3$-Oxyalkylenrest mit 2 bis 20 Oxyalkyleneinheiten mit der Maßgabe, daß keine O—O- oder O—N-Bindungen gebildet sind, ist; L eine hydrophile Kette, welche den Polyoxyalkylenrest $—[(R^5O)_m(CH_2CH_2O)_n]—$ enthält, ist, wobei $R^5$ $C_3$—$C_4$-Alkylen oder Hydroxyalkylen ist, und m und n solche Zahlen sind, daß der Rest $—(CH_2CH_2O)_n—$ wenigstens 50 Gew.-% des genannten Polyoxyalkylenrestes ausmacht; für die genannten Monoamine m 0 bis 4 und n wenigstens 12 ist; für die genannten Diamine m 0 bis 3 und n, falls $R^1$ $C_2$—$C_3$-Alkylen, Hydroxyalkylen oder Alkenylen ist, wenigstens 6 ist, und falls $R^1$ eine von $C_2$—$C_3$-Alkylen, Hydroxyalkylen oder Alkenylen verschiedene Bedeutung hat, wenigstens 3 ist; für die genannten Polyamine und Aminpolymere m 0 bis 10 und n wenigstens 3 ist; p 3 bis 8 ist; q 1 oder 0 ist; t 1 oder 0 ist, mit der Maßgabe, daß t gleich 1 ist, falls q gleich 1 ist; w 1 oder 0 ist; x + y + z wenigstens 2 ist; und y + z wenigstens 2 ist.

2. Eine Zusammensetzung nach Anspruch 1, worin $R^1$ $C_2$—$C_6$-Alkylen ist.

3. Eine Zusammensetzung nach Anspruch 2, worin $R^1$ $C_2$—$C_3$-Alkylen ist.

4. Eine Zusammensetzung nach Anspruch 3, wobei jeder Rest $R^2$ —L—X ist.

5. Eine Zusammensetzung nach Anspruch 4, wobei das genannte ethoxylierte Amin ein ethoxyliertes Monoamin ist.

6. Eine Zusammensetzung nach Anspruch 5, wobei n wenigstens 15 ist.

7. Eine Zusammensetzung nach Anspruch 6, wobei n 15 bis 35 ist.

8. Eine Zusammensetzung nach Anspruch 6, wobei L zur Gänze aus dem Rest $—CH_2CH_2O)_n—$ besteht.

9. Eine Zusammensetzung nach Anspruch 3, wobei das genannte ethoxylierte Amin ein ethoxyliertes Diamin ist.

10. Eine Zusammensetzung nach Anspruch 9, wobei n wenigstens 12 ist.

11. Eine Zusammensetzung nach Anspruch 10, wobei n 12 bis 42 ist.

12. Eine Zusammensetzung nach Anspruch 10, wobei L zur Gänze aus dem Rest $—(CH_2CH_2O)_n—$ besteht.

13. Eine Zusammensetzung nach Anspruch 4, wobei das genannte ethoxylierte Amin ein ethoxyliertes Aminpolymer ist, und $R^1$ $C_2$—$C_3$-Alkylen ist.

14. Eine Zusammensetzung nach Anspruch 13, wobei $R^1$ Ethylen ist, und L zur Gänze aus dem Rest $—(CH_2CH_2O)_n—$ besteht.

15. Eine Zusammensetzung nach Anspruch 14, wobei n wenigstens 12 ist.

16. Eine Zusammensetzung nach Anspruch 15, wobei das genannte ethoxylierte Aminpolymer ein ethoxyliertes Polyethylenamin ist, das vor der Ethoxylierung ein Molekulargewicht von 140 bis 310 hat.

17. Eine Zusammensetzung nach Anspruch 15, wobei das genannte ethoxylierte Aminpolymer ein ethoxyliertes Polyethylenimin ist, das vor der Ethoxylierung ein Molekulargewicht von 600 bis 1800 hat.

18. Eine Zusammensetzung nach Anspruch 4, wobei L zur Gänze aus dem Rest $—(CH_2CH_2O)_n—$ besteht.

19. Eine Zusammensetzung nach Anspruch 4, wobei X ein Gemisch aus 0 bis 30% der genannten anionischen Gruppen und aus 70 bis 100% der genannten nichtionischen Gruppen ist.

20. Eine Zusammensetzung nach Anspruch 18, wobei X eine nichtionische Gruppe ist.

21. Eine Zusammensetzung nach Anspruch 20, wobei die genannte nichtionische Gruppe H ist.

22. Eine Zusammensetzung nach Anspruch 4, wobei das genannte ethoxylierte Amin 0,1 bis 10 Gew.-% der Zusammensetzung ausmacht.

23. Eine Zusammensetzung nach Anspruch 22, wobei das genannte Detergens-grenzflächenaktive Mittel aus der Gruppe ausgewählt ist, die aus nichtionischen grenzflächenaktiven Mitteln, anionischen grenzflächenaktiven Mitteln, und Gemischen davon, besteht.

24. Eine Zusammensetzung nach Anspruch 22, welche derart formuliert ist, daß bei einer Konzentration von 0,1 bis 2 Gew.-% in Wasser von 20°C ein Anfangs-pH-Wert von 6,0 bis 8,5 erzielt wird.

25. Eine Zusammensetzung nach Anspruch 24, welche weiterhin 5 bis 40 Gew.-% einer 10 bis 22 Kohlenstoffatome enthaltenden Fettsäure enthält, und wobei das genannte Detergensgrenzflächenaktive Mittel umfaßt:

(a) 2 Gew.-% bis 60 Gew.-% eines anionischen, synthetischen grenzflächenaktiven Mittels; und

(b) 0,25 Gew.-% bis 12 Gew.-% eines co-grenzflächenaktiven Mittels, ausgewählt aus der Gruppe, bestehend aus:

(i) quaternären Ammonium-grenzflächenaktiven Mitteln der Formel:

$$[R^2(OR^3)_y][R^4(OR^3)_y]_2R^5N^+X^-$$

(ii) diquaternären Ammonium-grenzflächenaktiven Mitteln der Formel:

$$[R^2(OR^3)_y][R^4(OR^3)_y]_2N^+R^3N^+R^5[R^4(OR^3)_y]_2\ (X^-)_2$$

(iii) Amin-grenzflächenaktiven Mitteln der Formel:

$$[R^2(OR^3)_y][R^4(OR^3)_y]R^5N$$

(iv) Diamin-grenzflächenaktiven Mitteln der Formel:

$$[R^2(OR^3)_y][R^4(OR^3)_y]NR^3NR^5[R^4(OR^3)_y]$$

(v) Aminoxid-grenzflächenaktiven Mitteln der Formel:

$$[R^2(OR^3)_y][R^4(OR^3)_y]R^5N{\rightarrow}O$$

und

(iv) Di(aminoxid)-grenzflächenaktiven Mitteln der Formel:

$$[R^2(OR^3)_y][R^4(OR^3)_y]\underset{\downarrow \atop O}{N}R^3\underset{\downarrow \atop O}{N}R^5[R^4(OR^3)_y]\quad ,$$

worin $R^2$ eine Alkyl- oder Alkylbenzylgruppe mit 8 bis 18 Kohlenstoffatomen in der Alkylkette ist; jeder Rest $R^3$ aus der Gruppe ausgewählt ist, die aus $—CH_2CH_2—$, $—CH_2CH(CH_3)—$, $—CH_2CH(CH_2OH)—$, $—CH_2CH_2CH_2—$, und Gemischen davon, besteht; jeder Rest $R^4$ aus der Gruppe ausgewählt ist, die aus $C_1—C_4$-Alkyl, $C_1—C_4$-Hydroxyalkyl, Benzyl, durch Vereinigen der zwei $R^4$-Gruppen gebildeten Ringstrukturen, $—CH_2CHOHCHOHCOR^6CHOHCH_2OH$, wobei $R^6$ Hexose oder eine Hexosepolymer mit einem Molekulargewicht bis zu 1000 ist, und Wasserstoff, falls y nicht 0 ist, besteht; $R^5$ das gleiche wie $R^4$ ist, oder eine Alkylkette darstellt, wobei die Gesamtzahl der Kohlenstoffatome von $R^2$ plus $R^5$ nicht höher als 18 ist; jedes y 0 bis 10 bedeutet, und die Summe der y-Werte 0 bis 15 beträgt; und X ein verträgliches Anion ist; wobei das Molverhältnis des genannten anionischen grenzflächenaktiven Mittels zu dem genannten co-grenzflächenaktiven Mittel wenigstens 1 beträgt.

26. Eine Zusammensetzung nach Anspruch 24, wobei das genannte ethoxylierte Amin ein ethoxyliertes Polyethylenamin ist, das vor der Ethoxylierung ein Molkulargewicht von 140 bis 310 hat, L zur Gänze aus dem Rest $—(CH_2CH_2O)_n—$ besteht, und n wenigstens 12 ist.

27. Eine Verbindung mit Tonschmutzentfernungs/Antiredepositions-Eigenschaften, welche die Formel:

$$X—L—N—(R)_2$$

hat, worin jeder Rest R $C_1—C_4$-Alkyl oder Hydroxyalkyl, oder der Rest —L—X ist, oder zwei Reste R gemeinsam den Rest $—(CH_2)_r—A—(CH_2)_s—$ bilden, wobei A —O— oder $—CH_2—$ ist, r 1 oder 2 ist, s 1 oder 2 ist, und r + s 3 oder 4 ist; L eine hydrophile, den Polyoxyalkylenrest $—[(RO_m(CH_2CH_2O)_n]—$ enthaltende Kette ist, wobei m und n solche Zahlen sind, daß der Rest $—(CH_2CH_2O)_n—$ wenigstens 50 Gew.-% des genannten Polyoxyalkylenrestes ausmacht; X eine nichtionische Gruppe, eine anionische Gruppe, oder Gemische Davon, darstellt; m 0 bis 4 ist; und n wenigstens 12 ist.

28. Eine Verbindung nach Anspruch 27, wobei jeder Rest R der Rest —L—X ist.

29. Eine Verbindung nach Anspruch 28, wobei L zur Gänze aus dem Rest $—(CH_2CH_2O)_n—$ besteht.

30. Eine Verbindung nach Anspruch 24, wobei n wenigstens 15 ist.

31. Eine Verbindung nach Anspruch 30, wobei n 15 bis 35 ist.

32. Eine Verbindung nach Anspruch 30, wobei X eine nichtionische Gruppe ist.

33. Eine Verbindung nach Anspruch 32, wobei die genannte nichtionische Gruppe H ist.

34. Eine wasserlösliche, ethoxylierte Aminverbindung mit Tonschmutzentfernungs/Antiredepositions-Eigenschaften, ausgewählt aus der Gruppe, bestehend aus:

(1) ethoxylierte Diamin der Formel:

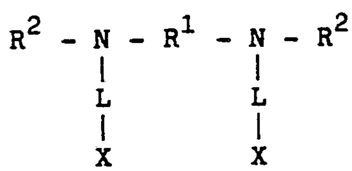

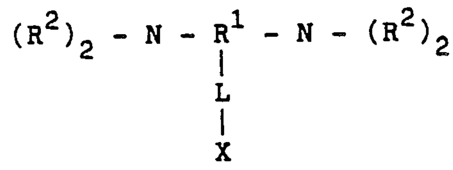

oder

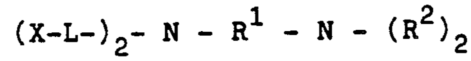

(2) ethoxylierten Polyamin der Formel:

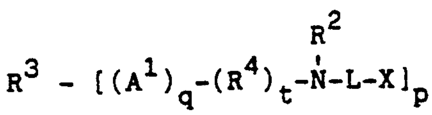

und

(3) Mischungen davon; worin $A^1$

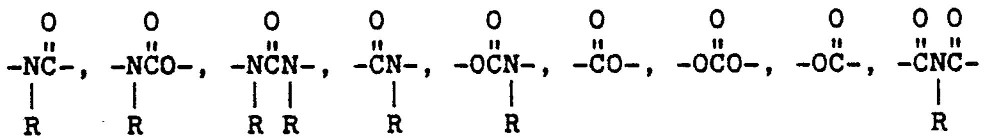

oder -O- ist;

R H oder $C_1$—$C_4$-Alkyl oder Hydroxyalkyl ist; $R^1$ $C_2$—$C_{12}$-Alkylen, Hydroxyalkylen, Alkenylen, Arylen oder Alkarylen oder ein $C_2$—$C_3$-Oxyalkylenrest mit 2 bis 20 Oxyalkyleneinheiten mit der Maßgabe, daß keine O—N-Bindungen gebildet sind, ist; jeder Rest $R^2$ $C_1$—$C_4$-Alkyl oder Hydroxyalkyl, oder der Rest —L—X ist, oder zwei Reste $R^2$ gemeinsam den Rest $—(CH_2)_r—A^2—(CH_2)_s—$ bilden, wobei $A^2$ —O— oder $—CH_2—$ ist, r 1 oder 2 ist, s 1 oder 2 ist, und r + s 3 oder 4 ist; X eine nichtionische Gruppe, eine anionische Gruppe oder ein Gemisch davon ist; $R^3$ eine substituierte $C_3$—$C_{12}$-Alkyl-, Hydroxyalkyl-, Alkenyl-, Aryl- oder Alkarylgruppe mit p Substitutionsstellen ist; $R^4$ $C_1$—$C_{12}$-Alkylen, Hydroxyalkylen, Alkoxylen, Arylen oder Alkarylen oder ein $C_2$—$C_3$-Oxyalkylenrest mit 2 bis 20 Oxyalkyleneinheiten ist; L eine hydrophile Kette, welche den Polyoxyalkylenrest $—[(R^5O)_m(CH_2CH_2O)_n]—$ enthält, ist, wobei $R^5$ $C_3$—$C_4$-Alkylen oder Hydroxyalkylen ist, und m und n solche Zahlen sind, daß der Rest $—(CH_2CH_2O)_n—$ wenigstens 60 Gew.-% des genannten Polyoxyalkylenrestes ausmacht; für die genannten Diamine m 0 bis 3 und n für den Fall, daß $R^1$ $C_2$—$C_3$-Alkylen, Hydroxyalkylen oder Alkenylen ist, wenigstens 6 ist, und für den Fall, daß $R^1$ von $C_2$—$C_3$-Alkylen, Hydroxyalkylen oder Alkenylen verschieden ist, wenigstens 3 ist; für die genannten Polyamine m 0 bis 10 und n wenigstens 3 ist; p 3 bis 8 ist; q 1 oder 0 ist, und t 1 oder 0 ist, mit der Maßgabe, daß t 1 ist, falls q 1 ist.

35. Eine Verbindung nach Anspruch 34, wobei $R^1$ $C_2$—$C_6$-Alkylen ist.

36. Eine Verbindung nach Anspruch 35, wobei $R^1$ $C_2$—$C_3$-Alkylen ist.

37. Eine Verbindung nach Anspruch 35, wobei jeder Rest $R^2$ der Rest —L—X ist.

38. Eine Verbindung nach Anspruch 37, wobei m und n solche Zahlen sind, daß der Rest $—(CH_2CH_2O)_n—$ wenigstens 85 Gew.-% des genannten Polyoxyalkylenrestes ausmacht.

39. Eine Verbindung nach Anspruch 38, wobei X H ist.

40. Eine Verbindung nach Anspruch 39, welche eine ethoxylierte, dikationische Verbindung ist.

41. Eine Verbindung nach Anspruch 40, wobei m 0 ist, und n wenigstens 12 ist.

42. Eine Verbindung nach Anspruch 34, welche eine ethoxylierte, polykationische Verbindung ist.

43. Eine Verbindung nach Anspruch 42, wobei $R^2$ eine substituierte $C_3$—$C_6$-Alkyl-, Hydroxyalkyl- oder Arylgruppe ist; $A^1$

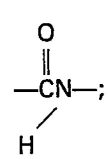

ist; und p 3 bis 6 ist.

44. Eine Verbindung nach Anspruch 43, wobei m 0 bis 10 ist.

45. Eine Verbindung nach Anspruch 44, wobei m 0 ist, und n wenigstens 12 ist.

**Revendications**

1. Composition détergente, qui comprend:

(a) de 1 à 75% en poids d'un tensioactif détergent choisi dans le groupe constitué par les tensioactifs détergents non ioniques, anioniques, ampholytes, zwittérioniques ou cationiques, ou leurs mélanges; et

(b) de 0,05 à 95% en poids d'une amine éthoxylée soluble dans l'eau ayant des propriétés d'élimination des salissures argileuses et d'antiredéposition, choisi dans le groupe constitué par

(1) les monoamines éthoxylées de formule:

$$(X—L—)—N—(R^2)_2$$

(2) les diamines éthoxylées de formule:

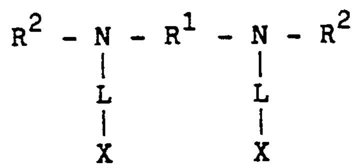

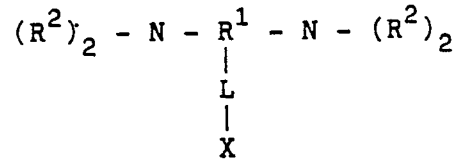

ou

$$(X-L-)_2-N-R^1-N-(R^2)_2$$

(3) les polyamines éthoxylées de formule:

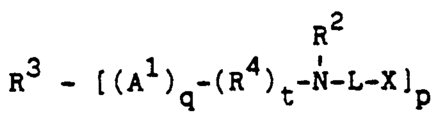

(4) les polymères d'amines éthoxylées de formule générale:

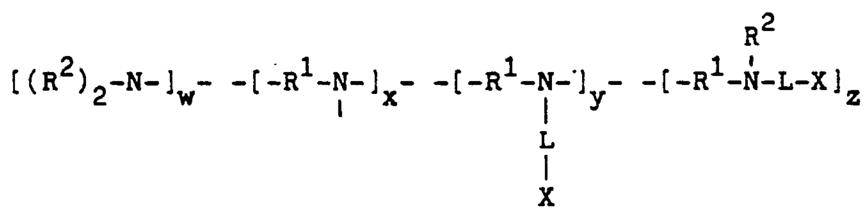

et

(5) leurs mélanges, où $A^1$ est

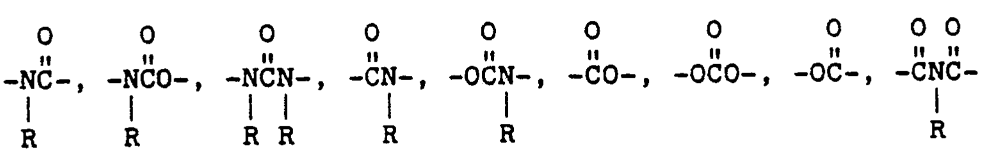

ou —O— ;

R est H ou un groupe alkyle ou hydroxyalkyle en $C_1$—$C_4$; $R^1$ est un groupe alkylène, hydroxyalkylène, alcénylène, arylène ou alkylarylène en $C_2$—$C_{12}$, ou un groupement oxyalkylène en $C_2$—$C_3$ comportant de 2 à 20 motifs oxyalkylène, à condition qu'aucune liaison O—N n soit formée; chaque $R^2$ est un groupe alkyle ou hydroxyalkyle en $C_1$—$C_4$, le groupement —L—X, ou bien deux $R^2$ forment ensemble le groupement $—(CH_2)_r—A^2—(CH_2)_s—$, dans lequel $A^2$ est —O— ou $—CH_2—$, r est égal à 1 ou 2, s est égal à 1 ou 2 et r + s est égal à 3 ou 4; X est un groupe non ionique, un groupe anionique ou un mélange de ceux-ci; $R^3$ est un groupe substitué en $C_3$—$C_{12}$ alkyle, hydroxyalkyle, alcényle, aryle ou alkylaryle comportant p sites de substitution; $R^4$ est un groupe alkylène, hydroxyalkylène, alcénylène, arylène ou alkylarylène en $C_1$—$C_{12}$, ou un groupement oxyalkylène en $C_2$—$C_3$ comportant de 2 à 20 motifs oxyalkylène, à condition qu'aucune liaison O—O ou O—N ne soit formée; L est une chaîne hydrophile qui contient le groupement polyoxyalkylène $—[(R^5O)_m(CH_2CH_2O)_n]—$, dans lequel $R^5$ est un groupe alkylène ou hydroxyalkylène en $C_3$—$C_4$ et m et n sont des nombres tels que le groupement $—(CH_2CH_2O)_n—$ constitue au moins 50% en poids dudit groupement polyoxyalkylène; pour lesdites monoamines, m a une valeur de 0 à 4, et n est au moins égal à 12; pour lesdites diamines, m a une valeur de 0 à 3 et n est au moins égal à 6 lorsque $R^1$ est un groupe alkylène, hydroxylalkylène ou alcénylène en $C_2$—$C_3$, et au moins égal à 3 lorsque $R^1$ est autre qu'un groupe alkylène,

hydroxyalkylène ou alcénylène en $C_2$—$C_3$; pour lesdites polyamines et lesdits polymères d'amines, m a une valeur de 0 à 10 et n est au moins égal à 3; p a une valeur de 3 à 8; q est égal à 1 ou 0; t est égal à 1 ou 0, à condition que t soit égal à 1 lorsque q est égal à 1; w est égal à 1 ou 0, x + y + z est au moins égal à 2, et y + z est au moins égal à 2.

2. Composition selon la revendication 1, dans laquelle $R^1$ est un groupe alkylène en $C_2$—$C_6$.

3. Composition selon la revendication 2, dans laquelle $R^1$ est un groupe alkylène en $C_2$—$C_3$.

4. Composition selon la revendication 3, dans laquelle chaque $R^2$ est —L—X.

5. Composition selon la revendication 4, dans laquelle ladite amine éthylée est une monoamine éthoxylée.

6. Composition selon la revendication 5, dans laquelle n est au moins égal à 15.

7. Composition selon la revendication 6, dans laquelle n a une valeur de 15 à 35.

8. Composition selon la revendication 6, dans laquelle L est entièrement constitué par le groupement $-(CH_2CH_2O)_n-$.

9. Composition selon la revendication 3, dans laquelle ladite amine éthoxylée est une diamine éthoxylée.

10. Composition selon la revendication 9, dans laquelle n est au moins égal à 12.

11. Composition selon la revendication 10, dans laquelle n a une valeur de 12 à 42.

12. Composition selon la revendication 10, dans laquelle L est entièrement constitué par le groupement $-(CH_2CH_2O)_n-$.

13. Composition selon la revendication 4, dans laquelle ladite amine éthoxylée est un polymère d'amine éthoxylée et $R^1$ est un groupe alkylène en $C_2$—$C_3$.

14. Composition selon la revendication 13, dans laquelle $R^1$ est un groupe éthylène et L est entièrement constitué par le groupement $-(CH_2CH_2O)_n-$.

15. Composition selon la revendication 14, dans laquelle n est au moins égal à 12.

16. Composition selon la revendication 15, dans laquelle ledit polymère d'amine éthoxylée est une polyéthylène-amine éthoxylée ayant une masse moléculaire de 140 à 310 avant l'éthoxylation.

17. Composition selon la revendication 15, dans laquelle ledit polymère d'amine éthoxylée est une polyéthylène-imine éthoxylée ayant une masse moléculaire de 600 à 1800 avant l'éthoxylation.

18. Composition selon la revendication 4, dans laquelle L est entièrement constitué par le groupement $-(CH_2CH_2O)_n-$.

19. Composition selon la revendication 4, dans laquelle X est un mélange de 0 à 30% desdits groupes anioniques et de 70 à 100% desdits groupes non ioniques.

20. Composition selon la revendication 18, dans laquelle X est un groupe non ionique.

21. Composition selon la revendication 20, dans laquelle le groupe non ionique est H.

22. Composition selon la revendication 4, dans laquelle ladite amine éthoxylée constitue de 0,1 à 10% du poids de la composition.

23. Composition selon la revendication 22, dans laquelle ledit tensioactif détergent est choisi dans le groupe constitué par les tensioactifs non ioniques, les tensioactifs anioniques et leurs mélanges.

24. Composition selon la revendication 22, formulée pour fournir un pH initial de 6,0 à 8,5 à une concentration de 0,1 à 2% en poids dans l'eau à 20°C.

25. Composition selon la revendication 24, qui comprend en outre de 5 à 40% en poids d'un acide gras contenant de 10 à 22 atomes de carbone et dans laquelle ledit tensioactif détergent comprend:

(a) de 2% à 60% en poids d'un tensioactif synthétique anionique;

(b) de 0,25% à 12% en poids d'un cotensioactif choisi dans le groupe constituée par:

(i) les tensioactifs de type ammonium quaternaire de formule:

$$[R^2(OR^3)_y][R^4(OR^3)_y]_2R^5N^+X^-$$

(ii) les tensioactifs de type ammonium diquaternaire de formule:

$$[R^2(OR^3)_y][R^4(OR^3)_y]_2N^+R^3N^+R^5[R^4(OR^3)_y]_2\ (X^-)_2$$

(iii) les tensioactifs de type amine de formule:

$$[R^2(OR^3)_y][R^4(OR^3)_y]R^5N$$

(iv) les tensioactifs de type oxyde d'amine de formule:

$$[R^2(OR^3)_y][R^4(OR^3)_y]NR^3NR^5[R^4(OR^3)_y]$$

(v) les tensioactifs de type oxyde d'amine de formule:

$$[R^2(OR^3)_y][R^4(OR^3)_y]R^5N\rightarrow O$$

et

(iv) les tensioactifs de type di(oxyde d'amine) de formule:

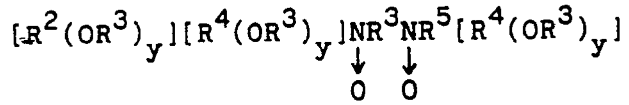

où $R^2$ est un groupe alkyle ou alkylbenzyle comportant de 8 à 18 atomes de carbone dans la chaîne alkyle; chaque $R^3$ est choisi dans le groupe constitué par $—CH_2—CH_2—$, $—CH_2CH(CH_3)—$, $—CH_2CH(CH_2OH)—$, $—CH_2CH_2CH_2—$, et leurs mélanges; chaque $R^4$ est choisi dans le groupe constitué par les groupes alkyle en $C_1—C_4$, hydroxyalkyle en $C_1—C_4$, benzyle, les structures cycliques formées par la jonction de deux groupes $R^4$, $—CH_2CHOHCHOHCOR^6CHOHCH_2OH$, dans lequel $R^6$ est un hexose ou un polymère d'hexose ayant une masse moléculaire allant jusqu'à 1000, et un hydrogène lorsque y n'est pas nul; $R^5$ est identique à $R^4$ ou est une chaîne alkyle dans laquelle le nombre total d'atomes de carbone de $R^2$ plus $R^5$ n'est pas supérieur à 18; chaque y a une valeur de 0 à 10 et la somme des valeurs de y est de 0 à 15; et X est un anion compatible; le rapport molaire dudit tensioactif anionique audit cotensioactif étant au moins égal à 1.

26. Composition selon la revendication 24, dans laquelle ladite amine éthoxylée est une polyéthylène-amine éthoxylée ayant une masse moléculaire de 140 à 310 avant l'éthoxylation, L est entièrement constitué par le groupement $—(CH_2CH_2O)_n—$ et n est au moins égal à 12.

27. Composé ayant des propriétés d'élimination des salissures argileuses et d'antiredéposition, répondant à la formule:

$$X—L—N—(R)_2$$

dans laquelle chaque R est un groupe alkyle ou hydroxyalkyle en $C_1—C_4$, le groupement $—L—X$, ou bien les deux R forment ensemble le groupement $—(CH_2)_r—A—(CH_2)_s—$, dans lequel A est $—O—$ ou $—CH_2—$, r est égal à 1 ou 2, s est égal à 1 ou 2 et r + s est égal à 3 ou 4; L est une chaîne hydrophile qui contient le groupement polyoxyalkylène $—[(RO_m(CH_2CH_2O)_n]—$, dans lequel m et n sont des nombres tels que le groupement $—(CH_2CH_2O)_n—$ constitue au moins 50% en poids dudit groupement polyoxyalkylène; X est un groupe non ionique, un groupe anionique ou un de leurs mélanges; m a une valeur de 0; à 4; et n est au moins égal à 12.

28. Composé selon la revendication 27, dans lequel chaque R est le groupement $—L—X$.

29. Composé selon la revendication 28, dans lequel L est entièrement constitué par le groupement $—(CH_2CH_2O)_n—$.

30. Composé selon la revendication 24, dans lequel n est au moins égal à 15.

31. Composé selon la revendication 30, dans lequel n a une valeur de 15 à 35.

32. Composé selon la revendication 30, dans lequel X est un groupe non ionique.

33. Composé selon la revendication 32, dans lequel ledit groupe non ionique est H.

34. Composé amine éthoxylée soluble dans l'eau ayant des propriétés d'élimination des salissures argileuses et d'antiredéposition, choisi dans le groupe constitué par:

(1) les diamines éthoxylées de formule:

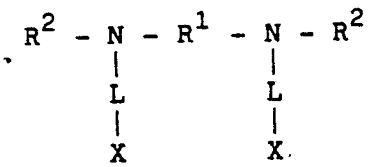

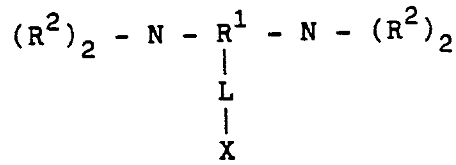

ou

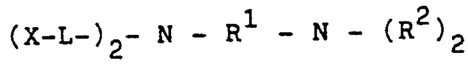

(2) les polyamines éthoxylées de formule:

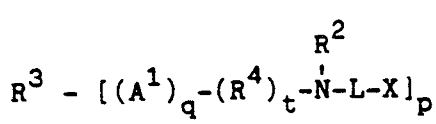

et

(3) leurs mélanges où $A^1$ est

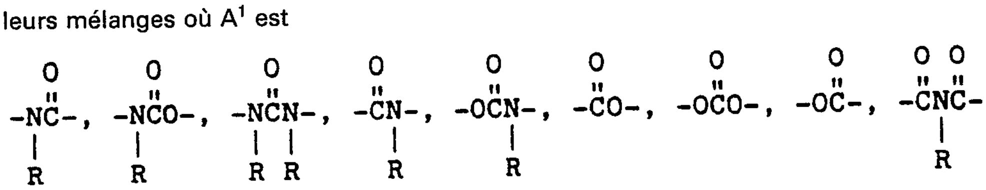

ou $-O-$ ;

R est H ou un groupe alkyle ou hydroxyalkyle en $C_1$—$C_4$; $R^1$ est un groupe alkylène, hydroxyalkylène, alcénylène, arylène ou alkylarylène en $C_2$—$C_{12}$, ou un groupement oxyalkylène en $C_2$—$C_3$ comportant de 2 à 20 motifs oxyalkylène à condition qu'aucune liaison 0—N ne soit formée; chaque $R^2$ est un groupe alkyle ou hydroxyalkyle en $C_1$—$C_4$, le groupement —L—X, ou deux $R^2$ forment ensemble le groupement $—(CH_2)_r—A^2—(CH_2)_s—$, dans lequel $A^2$ est —O— ou $—CH_2—$, r est égal à 1 ou 2, s est égal à 1 ou 2 et r + s est égal à 3 ou 4; X est un groupe non ionique, un groupe anionique ou un mélange de ceux-ci; $R^3$ est un groupe substitué en $C_3$—$C_{12}$ alkyle, hydroxyalkyle, alcényle, aryle ou alkylaryle comportant p sites de substitution; $R^4$ est un groupe alkylène, hydroxyalkylène, alcoxylène, arylène ou alkylarylène en $C_1$—$C_{12}$, ou un groupement oxyalkylène en $C_2$—$C_3$ comportant de 2 à 20 motifs oxyalkylène; L est une chaîne hydrophile qui contient le groupement polyoxyalkylène $—[(R^5O)_m(CH_2CH_2O)_n]—$, dans lequel $R^5$ est un groupe alkylène ou hydroxyalkylène en $C_3$—$C_4$ et m et n sont des nombres tels que le groupement $(CH_2CH_2O)_n$ constitue au moins 50% en poids dudit groupement polyoxyalkylène; pour lesdites diamines, m a une valeur de 0 à 3 et n est au moins égal à 6 lorsque $R^1$ est un groupe alkylène, hydroxyalkylène ou alcénylène en $C_2$—$C_3$, et au moins égal à 3 lorsque $R^1$ est autre qu'un groupe alkylène, hydroxyalkylène ou alcénylène en $C_2$—$C_3$; pour lesdites polyamines, m a une valeur de 0 à 10 et n est au moins égal à 3; p a une valeur de 3 à 8; q est égal à 1 ou 0, t est égal à 1 ou 0, à condition que t soit égal à 1 lorsque q est égal à 1.

35. Composé selon la revendication 34, dans lequel $R^1$ est un groupe alkylène en $C_2$—$C_6$.

36. Composé selon la revendication 35, dans lequel $R^1$ est un groupe alkylène en $C_2$—$C_3$.

37. Composé selon la revendication 35, dans lequel chaque $R^2$ est le groupement —L—X.

38. Composé selon la revendication 37, dans lequel m et n sont des nombres tels que le groupement $—(CH_2CH_2O)_n—$ constitue au moins 85% en poids dudit groupement polyoxyalkylène.

39. Composé selon la revendication 38, dans lequel X est H.

40. Composé selon la revendication 39, qui est un composé dicationique éthoxylé.

41. Composé selon la revendication 40, dans lequel m est nul et n est au moins égal à 12.

42. Composé selon la revendication 34, qui est un composé polycationique éthoxylé.

43. Composé selon la revendication 42, dans lequel $R^2$ est un groupe alkyle, hydroxyalkyle ou aryle en $C_3$—$C_6$; $A^1$ est

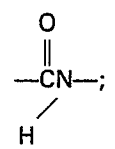

p a une valeur de 3 à 6.

44. Composé selon la revendication 43, dans lequel m a une valeur de 0 à 10.

45. Composé selon la revendication 44, dans lequel m est nul et n est au moins égal à 12.